(19) **Europäisches Patentamt** / **European Patent Office** / **Office européen des brevets**

(11) **EP 4 220 487 B1**

(12) **EUROPEAN PATENT SPECIFICATION**

(45) Date of publication and mention
of the grant of the patent:
**15.10.2025 Bulletin 2025/42**

(21) Application number: **23163801.6**

(22) Date of filing: **23.03.2023**

(51) International Patent Classification (IPC):
**G06N 3/045** (2023.01)  **G06N 3/0895** (2023.01)
**G06N 3/092** (2023.01)  **B60L 53/00** (2019.01)
**G06Q 50/06** (2024.01)  **B60L 53/60** (2019.01)
**G06N 3/006** (2023.01)  **G06N 3/044** (2023.01)
**G06N 3/08** (2023.01)  **G06Q 10/0637** (2023.01)
**G06Q 10/067** (2023.01)  **G06Q 50/40** (2024.01)
**G06N 3/0464** (2023.01)  **G06N 3/084** (2023.01)

(52) Cooperative Patent Classification (CPC):
**G06N 3/045; B60L 53/60; G06N 3/006;
G06N 3/044; G06N 3/08; G06N 3/0895;
G06N 3/092; G06Q 10/0637; G06Q 10/067;
G06Q 50/06; G06Q 50/40;** B60L 2240/72;
B60L 2260/44; B60L 2260/46; B60L 2260/52;

(Cont.)

(54) **METHOD AND APPARATUS FOR TRAINING INFORMATION ADJUSTMENT MODEL OF CHARGING STATION, STORAGE MEDIUM AND PRODUCT**

VERFAHREN UND VORRICHTUNG ZUM TRAINIEREN EINES INFORMATIONSANPASSUNGSMODELLS EINER LADESTATION, SPEICHERMEDIUM UND PRODUKT

PROCÉDÉ ET APPAREIL D'APPRENTISSAGE DE MODÈLE DE RÉGLAGE D'INFORMATIONS DE STATION DE CHARGE, SUPPORT DE STOCKAGE ET PRODUIT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.08.2022 CN 202210955011**

(43) Date of publication of application:
**02.08.2023 Bulletin 2023/31**

(73) Proprietor: **Beijing Baidu Netcom
Science Technology Co., Ltd.
Beijing 100085 (CN)**

(72) Inventors:
• **ZHANG, Weijia**
**Beijing, 100085 (CN)**
• **ZHANG, Le**
**Beijing, 100085 (CN)**
• **LIU, Hao**
**Beijing, 100085 (CN)**
• **HAN, Jindong**
**Beijing, 100085 (CN)**
• **QIN, Chuan**
**Beijing, 100085 (CN)**
• **ZHU, Hengshu**
**Beijing, 100085 (CN)**
• **XIONG, Hui**
**Beijing, 100085 (CN)**

(74) Representative: **Lucke, Andreas
Boehmert & Boehmert
Anwaltspartnerschaft mbB
Pettenkoferstrasse 22
80336 München (DE)**

(56) References cited:
**CN-A- 112 819 215**

- **ZHANG WEIJIA ET AL: "RLCharge: Imitative Multi-Agent Spatiotemporal Reinforcement Learning for Electric Vehicle Charging Station Recommendation", IEEE TRANSACTIONS ON KNOWLEDGE AND DATA ENGINEERING, IEEE SERVICE CENTRE , LOS ALAMITOS , CA, US, vol. 35, no. 6, 27 May 2022 (2022-05-27), pages 6290 - 6304, XP011939819, ISSN: 1041-4347, [retrieved on 20220530], DOI: 10.1109/ TKDE.2022.3178819**

(52) Cooperative Patent Classification (CPC): (Cont.)
B60L 2260/54; G06N 3/0464; G06N 3/084

# EP 4 220 487 B1

**Description**

TECHNICAL FIELD

The present invention relates to the field of artificial intelligence technology, particular to the field of multi-agent reinforcement learning technology, and more particular to a method and apparatus for training an information adjustment model of a charging station, a method and apparatus for selecting a charging station, a storage medium and a computer program product, and may be applied to a scenario of charging at a charging station.

BACKGROUND

As the society pays more and more attention to clean energy and environmental protection issues, rechargeable vehicles have begun to become the choice of more and more people. Although many public charging stations have been built in cities to meet the growing battery charging demand, these charging stations generally perform a unified dynamic price adjustment at intervals of a fixed time (e.g., 1 hour), and generally face the problems of unbalanced battery charging demand and low utilization rate, which makes the battery charging experience of the drivers of the rechargeable vehicles poor. The low utilization rate of the charging stations also hinders the construction of operators for charging stations and hinders the further popularization of rechargeable vehicles.

"RLCharge: Imitative Multi-Agent Spatiotemporal Reinforcement Learning for Electric Vehicle Charging Station Recommendation" (ZHANG WEIJIA ET AL, 27 May 2022) develops a multi-agent actor-critic framework with centralized training decentralized execution, and proposes the spatial-temporal heterogeneous graph convolution module, including (1) a dynamic graph convolution block to generate real-time representations for observable forthcoming EVs, and (2) a spatial graph convolution block to share the agent observations by message propagation between spatially adjacent agents. After that, to effectively optimize multiple divergent learning objectives, the centralized attentive critic to multi-critics is extended, and a dynamic gradient re-weighting strategy to adaptively guide the optimization direction is developed.

CN112819215A discloses a recommendation strategy training method and device, electronic equipment and a readable storage medium, and relates to the technical fields of artificial intelligence, automatic driving, intelligent traffic, deep learning and the like. According to a specific implementation scheme, training data is acquired, wherein the training data comprises state information of each charging station in multiple charging stations when a charging request appears, a recommended action value of each charging station for the charging request, and a reward value for each charging station, obtained based on the recommendation result of the charging request, the recommendation result is determined according to the recommended action value of each charging station for the charging request; a recommendation strategy of each charging station is trained according to the training data; the recommendation strategy represents a relationship between state information of the charging station when the charging request appears and the recommended action value of the charging station for the charging request.

SUMMARY

Embodiments of the present invention provide a method and apparatus for training an information adjustment model of a charging station, a method and apparatus for selecting a charging station, a storage medium and a computer program product.

According to a first aspect, the present invention provides a method for training an information adjustment model of a charging station according to claim 1. The method includes: acquiring a battery charging request, and determining environment state information corresponding to each charging station in a charging station set; determining, through an initial policy network, target operational information of the each charging station in the charging station set for the battery charging request, according to the environment state information corresponding to the each charging station in the charging station set; determining, through an initial value network, a cumulative reward expectation corresponding to the battery charging request according to the environment state information and the target operational information corresponding to the each charging station in the charging station set; training the initial policy network and the initial value network by using a deep deterministic policy gradient algorithm, to obtain a trained policy network and a trained value network, wherein, during the training, the initial value network is updated through a temporal difference method, and the initial policy network is updated with a goal of maximizing the cumulative reward expectation corresponding to the battery charging request; and determining the trained policy network as an information adjustment model corresponding to the each charging station in the charging station set.

A method for selecting a charging station is also disclosed herein. The method includes: acquiring a battery charging request; determining environment state information corresponding to each charging station in a charging station set; for the each charging station in the charging station set, determining, through a trained information adjustment model

3

corresponding to the each charging station, target operational information of the each charging station for the battery charging request according to the environment state information of the charging station, wherein, on a basis that charging stations in the charging station set perceive environment state information of each other, the trained information adjustment model is obtained by performing multi-agent reinforcement learning based on a deep deterministic policy gradient algorithm; displaying the target operational information of the each charging station in the charging station set for the battery charging request; and receiving a selection instruction and determining a target charging station from the charging station set according to the selection instruction.

According to a second aspect, the present invention provides an apparatus for training an information adjustment model of a charging station according to claim 7. The apparatus includes: a first determining unit, configured to acquire a battery charging request, and determine environment state information corresponding to each charging station in a charging station set; a second determining unit, configured to determine, through an initial policy network, target operational information of the each charging station in the charging station set for the battery charging request, according to the environment state information corresponding to the each charging station in the charging station set; a third determining unit, configured to determine, through an initial value network, a cumulative reward expectation corresponding to the battery charging request according to the environment state information and the target operational information corresponding to the each charging station in the charging station set; a training unit, configured to train the initial policy network and the initial value network by using a deep deterministic policy gradient algorithm, to obtain a trained policy network and a trained value network, wherein, during the training, the initial value network is updated through a temporal difference method, and the initial policy network is updated with a goal of maximizing the cumulative reward expectation corresponding to the battery charging request; and a fourth determining unit, configured to determine the trained policy network as an information adjustment model corresponding to the each charging station in the charging station set.

An apparatus for selecting a charging station is also disclosed herein. The apparatus includes: an acquiring unit, configured to acquire a battery charging request; a fifth determining unit, configured to determine environment state information corresponding to each charging station in a charging station set; a sixth determining unit, configured to determine through a trained information adjustment model corresponding to the each charging station, for the each charging station in the charging station set, target operational information of the each charging station for the battery charging request according to the environment state information of the charging station, wherein, on a basis that charging stations in the charging station set perceive environment state information of each other, the trained information adjustment model is obtained by performing multi-agent reinforcement learning based on a deep deterministic policy gradient algorithm; a displaying unit, configured to display the target operational information of the each charging station in the charging station set for the battery charging request; and a receiving unit, configured to receive a selection instruction and determine a target charging station from the charging station set according to the selection instruction.

According to a third aspect, the present invention provides a non-transitory computer readable storage medium according to claim 12. The non-transitory computer readable storage medium stores a computer instruction, wherein the computer instruction is used to cause the computer to perform the method according to any one of the implementations described in the first and/or second aspect.

According to a fourth aspect, the present invention provides a computer program product according to claim 13 comprising a computer program, where the computer program, when executed by a processor, implements the method according to any one of the implementations described in the first and/or second aspect.

It should be understood that the content described in this part is not intended to identify key or important features of embodiments of the present invention, and is not used to limit the scope of the present invention. Other features of the present invention will be easily understood through the following description.

BRIEF DESCRIPTION OF THE DRAWINGS

The accompanying drawings are used for a better understanding of the scheme, and do not constitute a limitation to the present invention. Here:

Fig. 1 is a diagram of an example system architecture in which an embodiment of the present invention may be applied;
Fig. 2 is a flowchart of a part of a method for training an information adjustment model of a charging station according to the present invention;
Fig. 3 is a schematic diagram of an application scenario of the method for training an information adjustment model of a charging station according to an embodiment of the present invention;
Fig. 4 is a schematic diagram of a processing flow of an agent pooling module according to an embodiment of the present invention;
Fig. 5 is a schematic diagram of a selection for a subset from a charging station set;
Fig. 6 is a flowchart of the method for training an information adjustment model of a charging station according to an embodiment of the present invention;

Fig. 7 is a flowchart of a method according to the present invention;
Fig. 8 is a structural diagram of an apparatus for training an information adjustment model of a charging station according to an embodiment of the present invention;
Fig. 9 is a structural diagram of an apparatus for selecting a charging station; and
Fig. 10 is a schematic structural diagram of a computer system adapted to implement embodiments of the present invention.

DETAILED DESCRIPTION OF EMBODIMENTS

Example embodiments of the present invention are described below in combination with the accompanying drawings, and various details of the embodiments of the present invention are included in the description to facilitate understanding, and should be considered as examples only. Also, for clarity and conciseness, descriptions for well-known functions and structures are omitted in the following description.

In the technical solution described in embodiments of the present invention, the collection, storage, use, processing, transmission, provision, invention, etc. of the personal information of a user all comply with the provisions of the relevant laws and regulations, and do not violate public order and good customs.

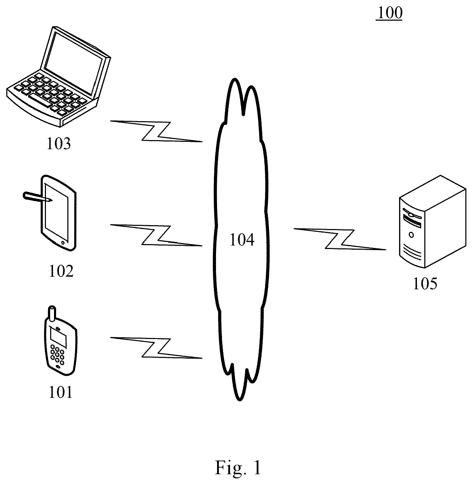

Fig. 1 illustrates an example architecture 100 in which a method and apparatus for training an information adjustment model of a charging station and a method and apparatus for selecting a charging station according to embodiments of the present invention may be applied.

As shown in Fig. 1, the system architecture 100 may include terminal device(s) 101, 102, 103, a network 104 and a server 105. The communication connections among the terminal devices 101, 102 and 103 constitute a topological network. The network 104 serves as a medium providing a communication link between the terminal device(s) 101, 102, 103 and the server 105. The network 104 may include various types of connections, for example, wired or wireless communication links, or optical fiber cables.

The terminal device(s) 101, 102, 103 may be hardware device(s) or software supporting a network connection for data interaction and data processing. When being hardware, the terminal device(s) 101, 102, 103 may be various electronic devices supporting a network connection and functions such as information acquisition, interaction, display and processing functions, the electronic devices including, but not limited to, a smartphone, a tablet computer, a vehicle-mounted computer, an e-book reader, a laptop portable computer, a desktop computer, and the like. When being the software, the terminal device(s) 101, 102, 103 may be installed in the above electronic devices. The terminal devices may be implemented as a plurality of pieces of software or a plurality of software modules (e.g., software or software modules for providing a distributed service), or may be implemented as a single piece of software or a single software module, which will not be specifically limited here.

The server 105 may be a server providing various services. As an example, the server 105 may be a backend processing server that performs, according to the training samples provided by the terminal device(s) 101, 102, 103, multi-agent reinforcement learning using a deep deterministic policy gradient algorithm, to obtain a trained information adjustment model corresponding to each charging station. As another example, the server 105 may be a backend processing server that, for a target charging station, determines, according to a battery charging request provided by the terminal device 101, 102 or 103, the target operational information for the battery charging request is determined through an information adjustment model corresponding to the target charging station, for a user to select a target charging station from a charging station set according to the target operational information. As an example, the server 105 may be a cloud server.

It should be noted that the server may be hardware or software. When being the hardware, the server may be implemented as a distributed server cluster composed of a plurality of servers, or may be implemented as a single server. When being the software, the server may be implemented as a plurality of pieces of software or a plurality of software modules (e.g., software or software modules for providing a distributed service), or may be implemented as a single piece of software or a single software module, which will not be specifically limited here.

It should also be noted that the method for training an information adjustment model of a charging station and the method for selecting a charging station that are provided in embodiments of the present invention may be performed by the server, by the terminal device(s), or by the server and the terminal device(s) that are in collaboration with each other. Correspondingly, the parts (e.g., the units) included in the apparatus for training an information adjustment model of a charging station and the apparatus for selecting a charging station may be all provided in the server, all provided in the terminal device(s), or separately provided in the server and the terminal device(s).

It should be appreciated that the numbers of the terminal device(s), the network(s) and the server(s) in Fig. 1 are merely illustrative. Any number of terminal device(s), network(s) and server(s) may be provided based on actual requirements. When an electronic device on which the method for training an information adjustment model of a charging station and the method for selecting a charging station run does not need to perform data transmission with another electronic device, the system architecture may only include the electronic device (e.g., a server or a terminal device) on which the method for training an information adjustment model of a charging station and the method for selecting a charging station run.

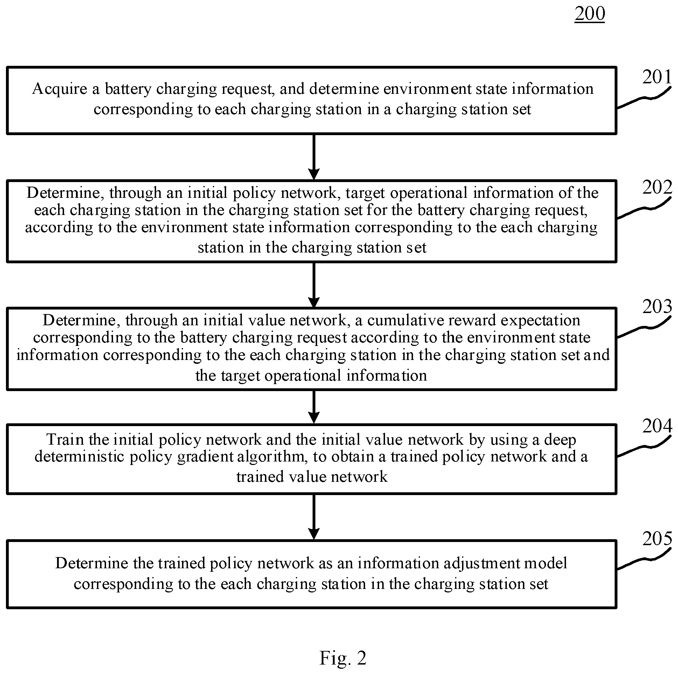

Referring to Fig. 2, Fig. 2 is a flowchart of a method for training an information adjustment model of a charging station provided by an embodiment of the present invention. Here, the flow 200 includes the following steps:

Step 201, acquiring a battery charging request, and determining environment state information corresponding to each charging station in a charging station set.

In this embodiment, an executing body (e.g., the terminal device(s) or the server in Fig. 1) of the method for training an information adjustment model of a charging station may acquire, by means of a wired network connection or wireless network connection, the battery charging request remotely or locally, and determine the environment state information corresponding to each charging station in the charging station set.

The battery charging request may be a request that is sent by a user of a rechargeable vehicle through a terminal device such as a smartphone or a vehicle-mounted computer, and represents that the rechargeable vehicle needs to be charged. When the rechargeable vehicle has a battery charging demand, a corresponding user such as a driver or a passenger will initiate a battery charging request at a charging platform. A battery charging request $q_t$ is defined as a t-th request in one day. The battery charging request $q_t$ includes the following attributes: the location $l_t$ at which the battery charging request $q_t$ is sent, the time $T_t$ at which the battery charging request $q_t$ is sent, and the time $T_t'$ at which $q_t$ is completed (when the rechargeable vehicle corresponding to the battery charging request is successfully charged or fails to be charged, it is considered that the battery charging request is completed).

For the received battery charging request, target operational information of each charging station in the charging station set may be sent to the user, such that the user may select a charging station from the charging station set according to the target operational information fed back.

Step 202, determining, through an initial policy network, target operational information of the each charging station in the charging station set for the battery charging request, according to the environment state information corresponding to the each charging station in the charging station set.

In this embodiment, through the initial policy network, the above executing body may determine the target operational information of the each charging station in the charging station set for the battery charging request, according to the environment state information corresponding to the each charging station in the charging station set.

The target operational information may be any operational information that can be adjusted by the charging station in operation. As an example, the target operational information may be the operational information of the charging station such as pricing information, battery charging time information, and battery charging speed information.

The pricing information is took as an example, which may be a battery charging unit-price. The battery charging unit-price represents a battery charging price per kilowatt-hour (kW·h) of the charging station, including an electricity unit-price per kilowatt-hour (kW·h) and a service unit-price of the charging station. When the battery charging request $q_t$ is successfully serviced by the charging station, i.e., the battery charging is successful at the charging station, the profit of the charging station for this battery charging service of the battery charging request $q_t$ is defined as:

$$\text{profit} = (\text{charging unit-price} - \text{electricity unit-price}) \times \text{charging volume}$$

Further, the total profit of the plurality of charging stations in the charging station set is a sum of profits corresponding to all battery charging requests.

The charging station set includes a plurality of charging stations. As an example, the charging station set refers to all charging stations in a preset partitioned region (e.g., obtained by partitioning according to administrative regions or according to specified areas). Each charging station may be regarded as an agent. A charging station set C includes N charging stations $c^i \in C$.

For each charging station $c^i$, the environment state information of the charging station relative to the battery charging request $q_t$ may be considered as an observation for the charging station $c^i$, including information representing the charging station $c^i$ and information representing a correlation between the battery charging request $q_t$ and the charging station $c^i$. For the battery charging request $q_t$, the environment state information of the charging station $c^i$ includes: current time $T_t$, the number of current idle charging spots at the charging station $c^i$, the number of battery charging requests in a future preset time period (e.g., 15 minutes) in the vicinity of the charging station $c^i$ (a trained prediction model may be used to predict the number of battery charging requests in the future), the estimated traveling time from the location of a current battery charging request to the charging station $c^i$, the charging power of the charging station $c^i$, a current electricity unit-price of $c^i$, and the number of rechargeable vehicles that are heading for $c^i$ (which can be acquired through a charging platform application).

In this embodiment, an actor (policy network)-critic (value network) architecture is used. Here, the policy network is used to determine action information according to the environment state information corresponding to the each charging station in the charging station set, i.e., the target operational information of the each charging station in the charging station set for the battery charging request.

As an example, $O_t = \{o_t^1, o_t^2, ..., o_t^N\}$ is defined as a joint observation (joint environment state information) of all agents at a t-th step (i.e., a t-th battery charging request), and $O_t$ is inputted into the policy network to obtain the target operational information $a_t^i$ of the each charging station in the charging station set for the battery charging request.

For each charging station in the charging station set, the current observation $o_t^i$ is given, each charging station $c^i$ simultaneously performs a continuous action $a_t^i$, i.e., real-time target operational information provided by the charging station $c^i$ for the battery charging request $q_t$. Here, the joint action of all agents is defined as $A_t = \{a_t^1, a_t^2, ..., a_t^N\}$. Each charging station $c^i$ determines corresponding target operational information $a_t^i$. According to the target operational information of each charging station, the user sending the battery charging request $q_t$ may select an appropriate charging station for battery charging. The process of changing from the status $s_t$ corresponding to the battery charging request $q_t$ to the status $s_{t+1}$ associated with a next battery charging request $q_{t+1}$ may be considered as a state transition. With the state transition, the environment state information $o_t^i$ of each charging station $c^i$ in the charging station set is transferred to $o_{t+1}^i$.

Here, the policy network may adopt a deep neural network, for example, a network model such as a deep convolutional network or a residual network.

Step 203, determining, through an initial value network, a cumulative reward expectation corresponding to the battery charging request according to the environment state information and the target operational information corresponding to the each charging station in the charging station set.

In this embodiment, through the initial value network, the above executing body may determine the cumulative reward expectation corresponding to the charging request according to the environment state information and the target operational information corresponding to the each charging station in the charging station set. The cumulative reward expectation may be considered as a score for the target operational information of the charging station determined by the policy network. A higher numeric value represents better target operational information of the policy network.

As an example, $X_{D,t} = [O_t \| A_t]$ is defined as a joint feature obtained by concatenating the joint observation $O_t$ and the joint action $A_t$ of all the charging stations. The joint feature $X_{D,t}$ is inputted into the initial value network to obtain the cumulative reward expectation corresponding to the battery charging request.

The goal of all the charging stations in the charging station set is to maximize the cumulative reward $R_t$ of all battery charging request sets Q in one day:

$$R_t = \sum_{t'=t}^{|Q|} \gamma^{t'-t} r_{t'}.$$

Here, $\gamma$ denotes a discount rate and $r_{t'}$ denotes a corresponding reward.

The cumulative reward expectation is the expected value of the cumulative reward $R_t$.

In this embodiment, the value network may adopt a deep neural network, for example, a network model such as a deep convolutional network or a residual network. Here, the value network may adopt the same network structure as that of the policy network, or may adopt a network structure different from that of the policy network.

Step 204, training the initial policy network and the initial value network by using a deep deterministic policy gradient algorithm, to obtain a trained policy network and a trained value network.

In this embodiment, the above executing body may train the initial policy network and the initial value network by using the deep deterministic policy gradient algorithm, to obtain the trained policy network and the trained value network. Here, during the training, the initial value network is updated through a temporal difference method, and the initial policy network is updated with a goal of maximizing the cumulative reward expectation corresponding to the battery charging request.

The deep deterministic policy gradient (DDPG) algorithm is a policy learning method which integrates a deep learning neural network into a DPG (deterministic policy gradient). Compared with the DPG algorithm, the DDPG algorithm adopts a deep neural network as a simulation of a policy function and a value function. Then, the policy function and the value function are trained using a deep learning method.

As an example, for each battery charging request $q_t$, the target operational information of the each charging station in the charging station set for the battery charging request and the cumulative reward expectation corresponding to the battery charging request are determined by performing steps 202 and 203. Then, the initial value network is updated through the temporal difference (TD) method, and for the updated initial value network, the initial policy network is updated with the goal of maximizing the cumulative reward expectation corresponding to the battery charging request, to obtain the updated initial policy network. For each battery charging request, the above training process is iteratively performed until a preset termination condition is reached, thus obtaining the trained policy network and the trained value network. Here, the preset termination condition may be, for example, that the training time length exceeds a preset time length threshold, that the number of training exceeds a preset number threshold, and/or that a training loss tends to converge.

Step 205, determining the trained policy network as an information adjustment model corresponding to the each charging station in the charging station set.

In this embodiment, the above executing body may determine the trained policy network as the information adjustment model corresponding to the each charging station in the charging station set.

As an example, an information adjustment model may be deployed in each charging station in the charging station set, to determine the target operational information in real time according to the received battery charging request.

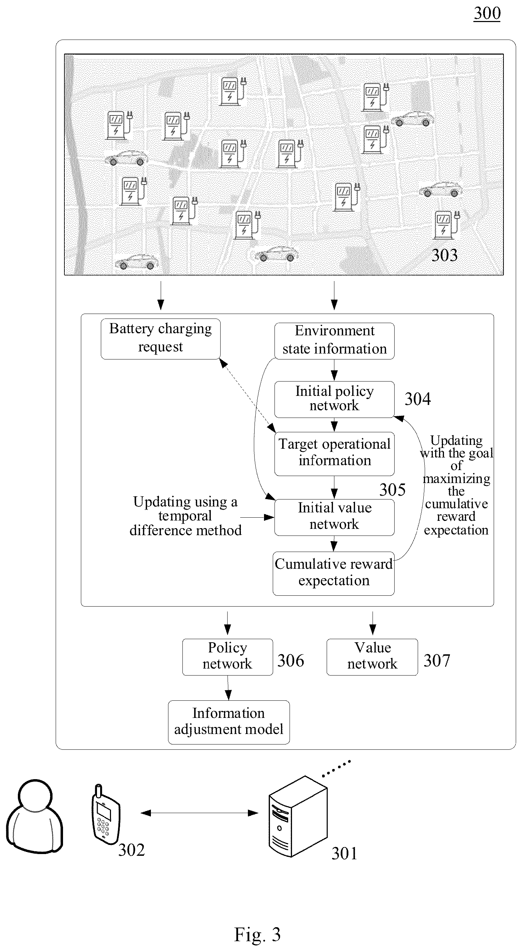

Further referring to Fig. 3, Fig. 3 is a schematic diagram 300 of an application scenario of the method for training an information adjustment model of a charging station according to an embodiment. In the application scenario of Fig. 3, first, a server 301 acquires a battery charging request from a terminal device 302, and determines environment state information corresponding to each charging station in a charging station set 303. Then, through an initial policy network 304, the server 301 determines target operational information of the each charging station in the charging station set for the battery charging request, according to the environment state information corresponding to the each charging station in the charging station set 303. Through an initial value network 305, the server 301 determines a cumulative reward expectation corresponding to the battery charging request according to the environment state information corresponding to the each charging station in the charging station set 303 and the target operational information. The server 301 trains the initial policy network and the initial value network by using a deep deterministic policy gradient algorithm, to obtain a trained policy network 306 and a trained value network 307. Here, during the training, the initial value network is updated through a temporal difference method, and the initial policy network is updated with the goal of maximizing the cumulative reward expectation corresponding to the battery charging request. The server 301 determines the trained policy network 306 as an information adjustment model corresponding to the each charging station in the charging station set.

According to the invention, a method for training an information adjustment model of a charging station is provided. A charging station is used as an agent, and multi-agent reinforcement learning is performed based on a deep deterministic policy gradient algorithm, to train and obtain a policy network, that can determine target operational information in real time, as an information adjustment model, thereby improving the real-time performance and rationality of the charging station in determining the target operational information. According to the invention, in the model training phase, the goal is to maximize the cumulative reward of the charging station set as a whole, and thus the agents can perceive each other and the whole environment information, which improves the coordination among the charging stations in the charging station set and helps to solve the problem of uncoordinated battery charging among the charging stations, thereby improving the utilization rate of the charging stations.

In some alternative implementations of this embodiment, the above executing body may perform the above step 203 by:

first, determining, through an agent pooling module, integrated representation information representing all charging stations in the charging station set according to the environment state information and the target operational information corresponding to the each charging station in the charging station set; and second, determining, through the initial value network, the cumulative reward expectation corresponding to the battery charging request according to the integrated representation information.

For a training process for a large scale of charging stations in a centralized manner, a joint observation $O_t$ and a joint action $A_t$ of all the charging stations are related, and the dimensions of the joint observation $O_t$ and the joint action $A_t$ increase with the increase of the number of the charging stations. In a large-scale agent system, the centralized training approach will encounter a problem of dimensional explosion, resulting in a poor training effect. Therefore, a dimension reduction may be performed on the joint observation $O_t$ and the joint action $A_t$ through the agent pooling (AP) module, to solve the problem of vector dimension explosion caused by too many agents in the centralized training process.

In this implementation, the dimension reduction is performed on the environment state information and the target operational information corresponding to all the charging stations in the charging station set through the agent pooling module, to solve the problem of vector dimension explosion caused by too many charging stations in the centralized training process, which improves the applicability and the training efficiency of the training process.

In some alternative implementations of this embodiment, the above executing body may perform the first step by:

first, mapping, through a mapping vector, the environment state information and the target operational information corresponding to the each charging station in the charging station set to a score feature representing an importance of the charging station; then, determining a preset number of charging stations from the charging station set according to the score feature, and determining environment state information, target operational information and a score feature corresponding to the preset number of charging stations; then, normalizing the score feature corresponding to the preset number of charging stations to obtain a gate control vector; then, determining a gate control feature according to the environment state information, the target operational information and the gate control vector corresponding to the preset number of charging stations; and determining the integrated representation information of all the charging stations in the charging station set according to the gate control feature.

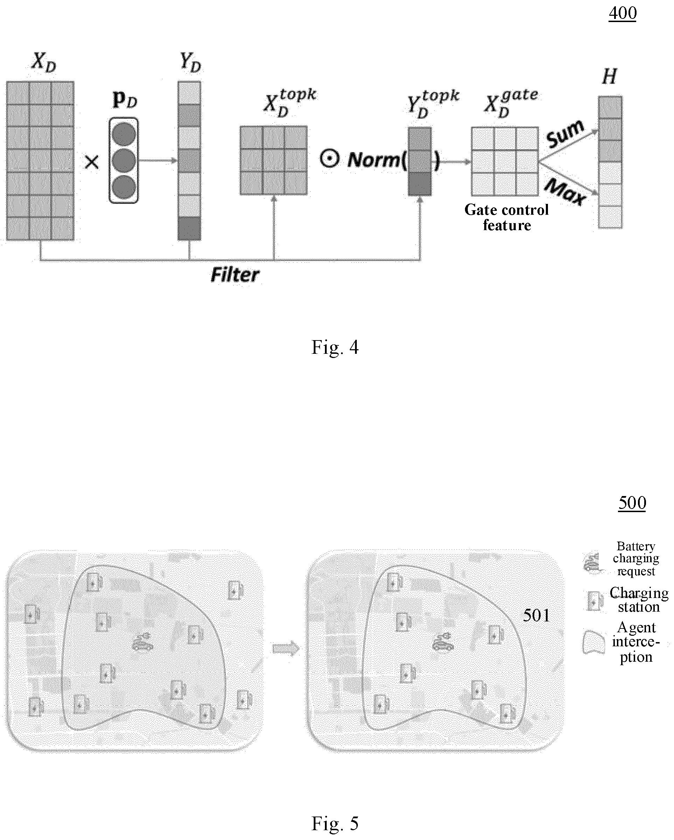

As shown in Fig. 4, Fig. 4 is a schematic diagram of a processing flow of an agent pooling module. $X_D = [O \| A]$ is defined as a joint feature obtained by concatenating a joint observation and a joint action of all charging stations. Through a learnable agent pooling module, the important information of the charging stations in a charging station set is distilled into a potential representation, and redundant information is removed at the same time. It should be noted that the following operations are assumed to be completed in a t-th step. The subscript $t$ is omitted in order to simplify the notations.

First, through the following formula, the projection of $X_D$ into a score feature (which may be an importance score) representing the importance of a charging station is learned, for the selection of a charging station in the charging station set C.

$$Y_D = X_D \mathbf{p}_D$$

Here, $\mathbf{p}_D$ is a learnable mapping vector.

Then, the most important first top-k charging stations are selected based on the score feature $Y_D$, and other charging stations are discarded, to implement the screening and filtering for the charging stations.

$$X_D^{topk}, Y_D^{topk} = \text{Filter}\,(X_D, Y_D, k_h)$$

Here, $Y_D^{topk}$ denotes top-$k$ maximum importance scores, $X_D^{topk}$ denotes a joint feature of charging stations corresponding to the top-k importance scores one by one, $k_h$ denotes numerical values corresponding to top-k, and Filter denotes screening and filtering.

Then, a gate control mechanism is employed to control the retention of knowledge through the following formula:

$$X_D^{\text{gate}} = X_D^{topk} \odot \text{Norm}\,\left(Y_D^{topk}\right).$$

Here, $Y_D^{topk}$ is normalized into a gate control vector, and $\odot$ denotes a Hadamard product. Here, Softmax is selected as a normalization function Norm. It should be noted that the gate control mechanism may cause the gradient energy to flow into a projection vector $\mathbf{p}_D$, such that $\mathbf{p}_D$ can perform learning by back propagation. The resulting gate control feature $X_D^{\text{gate}} = \left\{ x_D^{1,\,\text{gate}}, ..., x_D^{N_{topk},\,\text{gate}} \right\}$ is obtained.

Finally, the integrated representation information of the charging station set $C$ after the dimension reduction is obtained according to the gate control feature $X_D^{\text{gate}}$ through the following formula:

$$H = \; (\textstyle\sum_{i=1}^{N_{\text{topk}}} x_D^{i,gate}) \; \| \; (\max_{i=1}^{N_{\text{topk}}} x_D^{i,gate}) \; .$$

Here, $\|$ denotes a vector concatenating operation.

In this implementation, a specific operation flow of an agent pooling module is provided. An important charging station relative to the battery charging request is determined based on the screening and filtering for the charging stations. The retention of the knowledge is controlled based on the gate control mechanism, which further improves the accuracy of the integrated representation information determined by the agent pooling module and the training efficiency of the training process.

In some alternative implementations of this embodiment, the above executing body may perform the above step 204 through the following approach:

First, a first loss corresponding to the initial value network is determined through the temporal difference method.

The temporal difference methods includes the Sarsa method of on-policy and the Q-Learning method of off-policy. In this implementation, the first loss corresponding to the initial value network may be determined by any of the temporal difference methods.

Second, a second loss corresponding to the agent pooling module is determined through a self-supervised contrastive learning method.

Here, one query instance $H_q$, one positive instance $H_+$ and K-1 negative instances $\mathbf{H}_- = \{H_-^1, \dots, H_-^{K-1}\}$ are given. The self-supervised contrastive learning is intended to make the degree of matching between the query instance $H_q$ and the positive instance $H_+$ higher than the degree of matching between the query instance $H_q$ and any negative instance $H_-^i \in \mathbf{H}_-$, to facilitate the learning of a more discriminated representation of the instance.

In this implementation, the integrated representation information corresponding to the charging station set represented by the agent pooling module may be used as a query instance, and a positive instance and negative instances corresponding to the integrated representation information may be determined, to determine a self-supervised contrastive learning loss InfoNCE between the integrated representation information and the corresponding positive and negative instances as the second loss.

Third, the initial value network and the agent pooling module are updated according to the first loss and the second loss.

In this implementation, the above executing body may determine a total loss according to the first loss and the second loss based on a summation or a weighted summation manner, and the like, and then determine a gradient according to the total loss to update the initial value network and the agent pooling module according to a gradient descent method.

Fourth, the initial policy network is updated with the goal of maximizing the cumulative reward expectation corresponding to the battery charging request.

In this implementation, the learning goal of the policy network u is to maximize the following cumulative reward expectation:

$$J(\theta^u) = \mathbb{E}_{O_t \sim D}[Q(H_t)|_{a_t^i = u(o_t^i)}].$$

Here, $Du$ denotes a training sample set, $\theta^u$ denotes a parameter of the policy network $u$, Q denotes a value network, and $H_t$ denotes integrated representation information of charging stations in a charging station set corresponding to a battery charging request $q_t$. The training sample set may include a joint observation, a joint action, and reward information of all the charging stations.

In this implementation, the detailed processes of training the policy network, the pooling module, and the value network are provided, which helps to improve the accuracy of the trained policy network, the trained pooling module, and the trained value network.

In some alternative implementations of this embodiment, the above executing body may perform the above second step by:

first, determining, for a first subset in a joint feature, first integrated representation information through the agent pooling module, wherein the joint feature comprises the environment state information and the target operational information corresponding to the each charging station in the charging station set; then, determining, for a second subset in the joint feature, second integrated representation information through the agent pooling module; then, determining, for a third subset in a joint feature corresponding to another battery charging request different from the battery charging request, third integrated representation information through the agent pooling module; and finally, using a self-supervised contrastive learning loss as the second loss, the self-supervised contrastive learning loss being determined according to the first integrated representation information, the second integrated representation information, and the third integrated representation information.

In this implementation, a problem required to be solved is how to train the above agent pooling module to obtain an effective large-scale agent potential representation through the trained agent pooling module. A simple method is to update the agent pooling module through the optimization goal of the reinforcement learning. However, the reinforcement learning algorithm optimizes the policy of the agent through the feedback reward of the environment, which is much more difficult to be controlled than the supervised learning. It is conceivable that it is very difficult for the reinforcement learning to learn effective potential representations from high dimensional inputs. Here, this implementation proposes a contrastive learning objective as an auxiliary task to promote the learning of the agent pooling module for the representations of a large scale of agents.

As an example, with the location $l_t$ of the battery charging request $q_t$ as a center, the environment state information and the target operational information corresponding to the top-$k_c$ charging stations closest to the location $l_t$ are selected to constitute $x_q$. As shown in Fig. 5, the process of selecting an agent seems like a process of intercepting a sub-region 501 from the map. Then, the first integrated representation information $H_q$ is obtained through the following formula:

$$H_q = \text{AP}(x_q).$$

Similarly, a charging station feature subset $x_+$ of the positive instance $H_+$ may be obtained by selecting randomly a location from the same $X_D$ as $H_q$ as a center to intercept top-$k_c$ charging stations closest to the center. Here, a plurality of different negative instances may be determined, and the agent feature subset $x_-^i$ of the negative instance $H_-^i$ is intercepted from $X_D$ corresponding to another battery charging request (e.g., battery charging requests $q_{t-1}$ and $q_{t-2}$) different from the battery charging request $q_t$ in the same way as described above. $H_+$ and $H_-^i$ are also obtained by respectively performing an agent pooling operation on $x_+$ and $x_-^i$.

Similarly, the second integrated representation information $H_+$ and the third integrated representation information $H_-^i$ are obtained through the following formulas:

$$H_+ = \text{AP}(x_+)$$

$$H_-^i = \text{AP}(x_-^i)$$

Then, our contrastive learning objective is optimized using the InfoNCloss,

$$L_c = -\log \frac{\exp(H_q^{\mathsf{T}} \mathbf{W}_c H_+)}{\exp\left(H_q^{\mathsf{T}} \mathbf{W}_c H_+\right) + \sum_{i=1}^{K-1} \exp\left(H_q^{\mathsf{T}} \mathbf{W}_c H_-^i\right)}.$$

Here, $\mathbf{W}_c$ is a learnable parameter in the agent pooling module. The second loss $L_c$ is used as an auxiliary task to perform a joint optimization together with the reinforcement learning objective.

In this implementation, the loss of the agent pooling module is determined through the self-supervised contrastive learning method, which reduces the training difficulty and improves the training efficiency as compared with the policy of optimizing the agent through the feedback reward of the environment by using the reinforcement learning algorithm.

In some alternative implementations of this embodiment, the above executing body may perform the above first step to obtain the first loss by:

first, determining, through a preset reward function, reward information according to a battery charging behavior of a charging object corresponding to the battery charging request, wherein the each charging station in the charging station set shares the reward information, and the preset reward function provides a different reward for a different battery charging behavior; and then, determining, through the temporal difference method, the first loss corresponding to the initial value network according to the cumulative reward expectation corresponding to the battery charging request, a reward corresponding to the battery charging request, and a cumulative reward expectation corresponding to another battery charging request next to the battery charging request.

In this implementation, a delayed reward design is proposed. Here, if the rechargeable vehicle corresponding to $q_t$ does not head for the controlled charging station (charging station in the charging station set) for battery charging, the reward returned by the environment is o. If the rechargeable vehicle corresponding to the battery charging request $q_t$ does not head for the controlled charging station (charging station in the charging station set) for charging, the reward returned by the environment is o. If the rechargeable vehicle corresponding to the charging request $q_t$ is drawn by the charging station to choose to charge, but the battery charging fails, the environment returns a relatively small reward $\varepsilon$. If the rechargeable vehicle corresponding to $q_t$ is eventually successfully charged at the charging station, the environment will additionally return a unit profit $p_t$ (charging unit-price - electricity unit-price) as an additional reward.

$$r_t = \begin{cases} \epsilon + p_t, & \text{Successfully charged} \\ \epsilon, & \text{Unsuccessfully charged} \\ 0, & \text{Not going to charge} \end{cases}$$

Also, in this implementation, all the charging stations in the charging station set share the same award to encourage the charging stations to cooperate with each other to maximize the total profit.

Further, the first loss is determined through the following formula:

$$L(\theta^Q) = \mathbb{E}_{O_t, A_t, O_{t+1}, r_t \sim D}[(Q(H_t) - y_t)^2]$$

$$y_t = r_t + \gamma Q(H_{t+1})|_{a^i_{t+1} = u(o^i_{t+1})}$$

Here, $\theta^Q$ denotes a parameter of a value function; $Q(H_t)$ denotes a cumulative reward expectation corresponding to the battery charging request $q_t$ determined by the value function Q according to the integrated representation information $H_t$; $y_t$ denotes a TD target (temporal difference target); $r_t$ denotes a reward corresponding to the battery charging request $q_t$; $Q(H_{t+1})$ denotes a cumulative reward expectation corresponding to a next battery charging request; $\gamma$ denotes a discount rate; and $a^i_{t+1} = u(o^i_{t+1})$ denotes that the policy network $u$ obtains the target operational information $a^i_{t+1}$ according to the environment state information $o^i_{t+1}$ of the next battery charging request corresponding to the charging station $c^i$.

In this implementation, the rewards corresponding to different battery charging requests are determined through the designed preset reward function, and then the first loss is determined according to the temporal difference method, thereby improving the accuracy of the first loss. The reward obtained through the preset reward function is shared among the charging stations in the charging station set, which helps to encourage the charging stations to cooperate with each other to improve the collaboration among the charging stations.

In this implementation, the above executing body may determine the weighted sum of the first loss and the second loss through the following formula:

$$L(\theta^Q, \theta^P) = \mathbb{E}_{O_t, A_t, O_{t+1}, r_t \sim D}[(Q(H_t) - y_t)^2] + \lambda L_c$$

Here, $\theta^P$ denotes a parameter of the agent pooling module, and $\lambda$ denotes a weighted term of the second loss $L_c$.

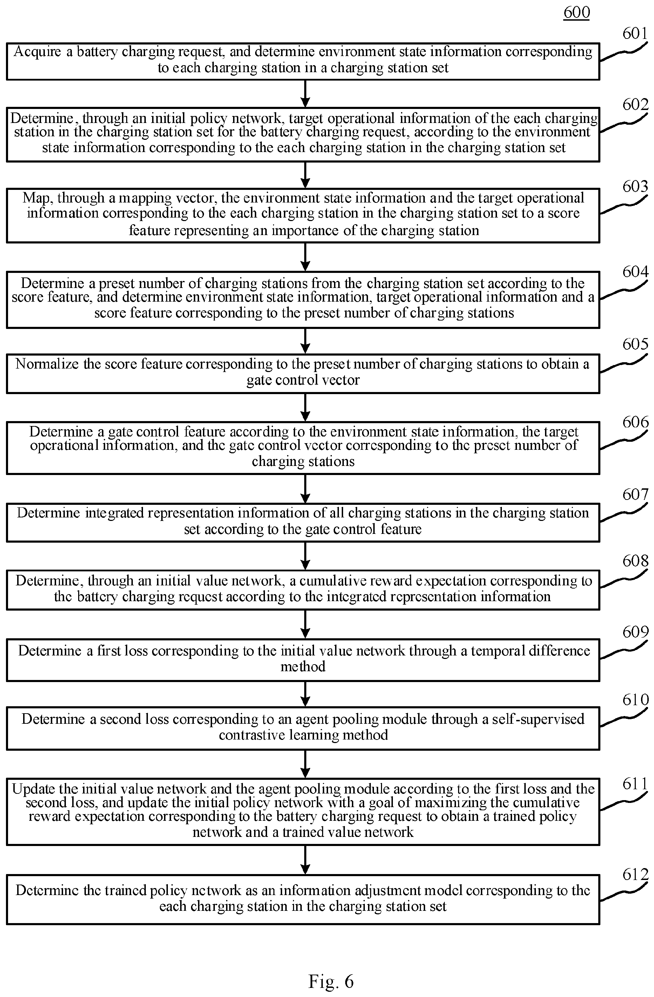

Further referring to Fig. 6, Fig. 6 illustrates a schematic flow 600 of a method for training an information adjustment model of a charging station according to another embodiment of the present invention, which includes the following steps:

Step 601, acquiring a battery charging request, and determining environment state information corresponding to each charging station in a charging station set.

Step 602, determining, through an initial policy network, target operational information of the each charging station in the charging station set for the battery charging request, according to the environment state information corresponding to the each charging station in the charging station set.

Step 603, mapping, through a mapping vector, the environment state information and the target operational information corresponding to the each charging station in the charging station set to a score feature representing an importance of the each charging station.

Step 604, determining a preset number of charging stations from the charging station set according to the score feature, and determining environment state information, target operational information and a score feature corresponding to the preset number of charging stations.

Step 605, normalizing the score feature corresponding to the preset number of charging stations to obtain a gate control vector.

Step 606, determining a gate control feature according to the environment state information, the target operational information, and the gate control vector corresponding to the preset number of charging stations.

Step 607, determining integrated representation information of all charging stations in the charging station set according to the gate control feature.

Step 608, determining, through an initial value network, a cumulative reward expectation corresponding to the battery charging request according to the integrated representation information.

Step 609, determining a first loss corresponding to the initial value network through a temporal difference method.

Step 610, determining a second loss corresponding to an agent pooling module through a self-supervised contrastive learning method.

Step 611, updating the initial value network and the agent pooling module according to the first loss and the second loss, and updating the initial policy network with a goal of maximizing the cumulative reward expectation corresponding to the charging request to obtain a trained policy network and a trained value network.

Step 612, determining the trained policy network as an information adjustment model corresponding to the each charging station in the charging station set.

It can be seen from this embodiment that, as compared with the embodiment corresponding to Fig. 2, the flow 600 of the method for training an information adjustment model of a charging station in this embodiment describes the processing process of the agent pooling module and the multi-agent reinforcement learning process in detail, the coordination among the charging stations in the charging station set is further improved, thereby improving the real-time performance and rationality of the charging station in determining the target operational information.

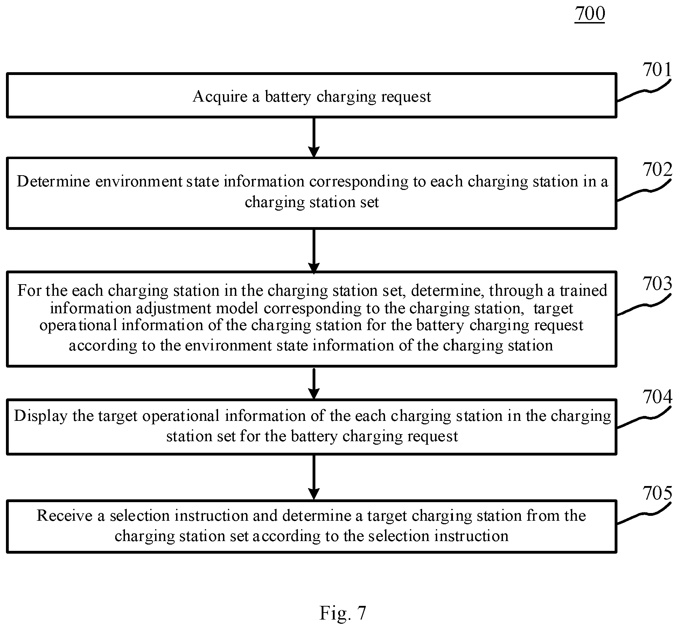

Further referring to Fig. 7, Fig. 7 illustrates a schematic flow 700 of a method for selecting a charging station according to the present invention, which includes the following steps:

Step 701, acquiring a battery charging request.

In this embodiment, an executing body (e.g., the terminal device or the server in Fig. 1) of the method for selecting a charging station may acquire, by means of a wired network connection or wireless network connection, the battery charging request remotely or locally.

The battery charging request may be a request that is sent by a user in a rechargeable vehicle through a terminal device such as a smartphone or a vehicle-mounted computer, and represents that the rechargeable vehicle needs to be charged. When the rechargeable vehicle has a battery charging demand, a corresponding user such as a driver or a passenger will initiate a battery charging request at a charging platform. A battery charging request $q_t$ is defined as a t-th request in one day. The battery charging request $q_t$ includes the following attributes: the location $l_t$ at which $q_t$ is sent, and the time $T_t$ at which $q_t$ is sent.

Step 702, determining environment state information corresponding to each charging station in a charging station set.

In this embodiment, the above executing body may determine the environment state information corresponding to a target charging station.

The charging station set includes a plurality of charging stations. As an example, the charging station set refers to all charging stations in a preset partitioned region (e.g., obtained by partitioning according to administrative regions or according to specified areas). Each charging station may be regarded as an agent. A charging station set C includes N charging stations $c^i \in C$. For a battery charging request, the location ranges of all charging stations in the charging station set corresponding to the battery charging request include the location at which the battery charging request is sent.

For each charging station $c^i$, the environment state information of the charging station relative to the battery charging request $q_t$ may be considered as an observation for the charging station $c^i$, including information representing the charging station $c^i$ and information representing a correlation between the battery charging request $q_t$ and the charging station $c^i$. For the battery charging request $q_t$, the environment state information of the charging station $c^i$ includes: current time $T_t$, the number of current idle charging spots at the charging station $c^i$, the number of charging requests in a future preset time period (e.g., 15 minutes) in the vicinity of the charging station $c^i$ (a trained prediction model may be used to predict the number of battery charging requests in the future), the estimated traveling time from the location of a current battery charging request to the charging station $c^i$, the charging power of the charging station $c^i$, a current electricity unit-price of $c^i$, and the number of rechargeable vehicles that are heading for $c^i$ (which can be acquired through a charging platform application).

Step 703, for the each charging station in the charging station set, determining, through a trained information adjustment model corresponding to the each charging station, target operational information of the each charging station for the battery charging request according to the environment state information of the charging station.

In this embodiment, for each charging station in the charging station set, the above executing body may determine the target operational information of the charging station for the battery charging request according to the environment state information of the charging station, through the trained information adjustment model corresponding to the charging station. Here, on the basis that the charging stations in the charging station set perceive the environment state information of each other, the information adjustment model is obtained by performing multi-agent reinforcement learning based on a deep deterministic policy gradient algorithm. Here, the information adjustment model is trained through the above embodiments 200 and 600.

As an example, for a target charging station $c^i \in C$, the real-time target operational information is generated in parallel according to the environment state information $o_t^i$ and information adjustment model u of the charging station:

$$a_t^i = u(o_t^i).$$

Here, an action $a_t^i$ is the target operational information generated in real time by the charging station for $q_t$.

Step 704, displaying the target operational information of the each charging station in the charging station set for the battery charging request.

In this embodiment, the above executing body may display the target operational information of the each charging station in the charging station set for the battery charging request.

As an example, through the charging platform, the target operational information of each charging station in the charging station set for the battery charging request may be display to the user who sends the battery charging request.

Step 705, receiving a selection instruction and determining a target charging station from the charging station set according to the selection instruction.

As an example, the user who sends the battery charging request may select an appropriate charging station as the target charging station according to the displayed target operational information of each charging station, and may give the selection instruction by means of an action instruction such as a touch or a click, or a voice instruction, and thus, the above executing body may determine the target charging station according to the selection instruction.

After determining the target charging station, the above executing body may further perform a navigation operation from a current location to the target charging station based on a navigation application.

In this embodiment, the target operational information is determined in real time for the charging station through the trained information adjustment model, which improves the real-time performance and rationality of the target operational information. At the same time, the coordination among the charging stations in the charging station set is improved, which helps to solve the problem of uncoordinated battery charging among the charging stations, thereby improving the utilization rate of the charging stations.

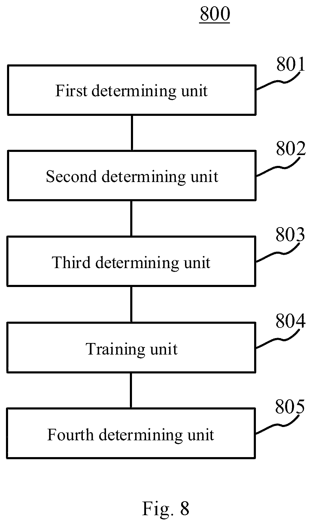

Further referring to Fig. 8, as an implementation of the method shown in the above drawings, an embodiment of the present invention provides an apparatus for training an information adjustment model of a charging station. The embodiment of the apparatus corresponds to the embodiment of the method shown in Fig. 2, and the apparatus may be applied in various electronic devices.

As shown in Fig. 8, an apparatus 800 for training an information adjustment model of a charging station includes: a first determining unit 801, configured to acquire a battery charging request, and determine environment state information corresponding to each charging station in a charging station set; a second determining unit 802, configured to determine, through an initial policy network, target operational information of the each charging station in the charging station set for the battery charging request, according to the environment state information corresponding to the each charging station in the charging station set; a third determining unit 803, configured to determine, through an initial value network, a cumulative reward expectation corresponding to the battery charging request according to the environment state information and the target operational information corresponding to the each charging station in the charging station set; a training unit 804, configured to train the initial policy network and the initial value network by using a deep deterministic policy gradient algorithm, to obtain a trained policy network and a trained value network, wherein, during the training, the initial value network is updated through a temporal difference method, and the initial policy network is updated with a goal of maximizing the cumulative reward expectation corresponding to the battery charging request; and a fourth determining unit 805, configured to determine the trained policy network as an information adjustment model corresponding to the each charging station in the charging station set.

In some alternative implementations of this embodiment, the third determining unit 803 is further configured to: determine, through an agent pooling module, integrated representation information representing all charging stations in the charging station set according to the environment state information and the target operational information corresponding to the each charging station in the charging station set; and determine, through the initial value network, the cumulative reward expectation corresponding to the battery charging request according to the integrated representation information.

In some alternative implementations of this embodiment, the third determining unit 803 is further configured to: map, through a mapping vector, the environment state information and the target operational information corresponding to the each charging station in the charging station set to a score feature representing an importance of the each charging station; determine a preset number of charging stations from the charging station set according to the score feature, and determine environment state information, target operational information and a score feature corresponding to the preset number of charging stations; normalize the score feature corresponding to the preset number of charging stations to obtain a gate control vector; determine a gate control feature according to the environment state information, the target operational information and the gate control vector corresponding to the preset number of charging stations; and determine the integrated representation information of all the charging stations in the charging station set according to the gate control feature.

In some alternative implementations of this embodiment, the training unit 804 is further configured to: determine a first loss corresponding to the initial value network through the temporal difference method; determine a second loss corresponding to the agent pooling module through a self-supervised contrastive learning method; update the initial value network and the agent pooling module according to the first loss and the second loss; and update the initial policy network with the goal of maximizing the cumulative reward expectation corresponding to the battery charging request.

In some alternative implementations of this embodiment, the training unit 804 is further configured to: determine, for a first subset in a joint feature, first integrated representation information through the agent pooling module, wherein the joint feature comprises the environment state information and the target operational information corresponding to the each charging station in the charging station set; determine, for a second subset in the joint feature, second integrated representation information through the agent pooling module; determine, for a third subset in a joint feature corresponding to another battery charging request different from the battery charging request, third integrated representation information through the agent pooling module; and use a self-supervised contrastive learning loss as the second loss, the self-supervised contrastive learning loss being determined according to the first integrated representation information, the second integrated representation information and the third integrated representation information.

In some alternative implementations of this embodiment, the training unit 804 is further configured to: determine, through a preset reward function, reward information according to a battery charging behavior of a charging object corresponding to the battery charging request, wherein the each charging station in the charging station set shares the reward information, and the preset reward function provides a different reward for a different battery charging behavior; and determine, through the temporal difference method, the first loss corresponding to the initial value network according to the cumulative reward expectation corresponding to the battery charging request, a reward corresponding to the battery charging request, and a cumulative reward expectation corresponding to a battery charging request next to the battery charging request.

In this embodiment, an apparatus for training an information adjustment model of a charging station is provided. A charging station is used as an agent, and multi-agent reinforcement learning is performed based on a deep deterministic policy gradient algorithm, to train and obtain a policy network that can determine target operational information in real time as an information adjustment model, thereby improving the real-time performance and rationality of the charging station in determining the target operational information. In the model training phase, the goal is to maximize the cumulative reward of the charging station set as a whole, and thus the agents can perceive each other and the whole environment information, which improves the coordination among the charging stations in the charging station set and helps to solve the problem of uncoordinated charging among the charging stations, thereby improving the utilization rate of the charging stations.

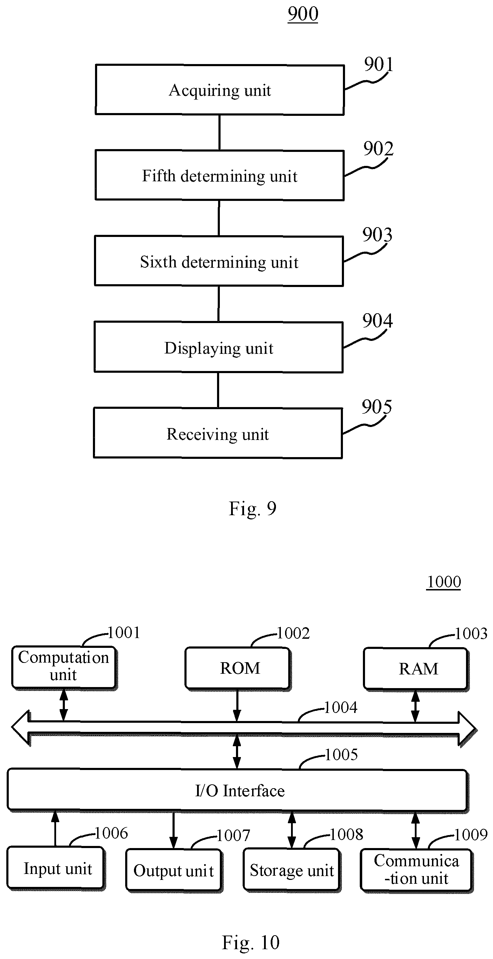

Further referring to Fig. 9, as an implementation of the method shown in the above drawings, an embodiment of the present invention provides an apparatus for selecting a charging station. The embodiment of the apparatus corresponds to the embodiment of the method shown in Fig. 7, and the apparatus may be applied in various electronic devices.

As shown in Fig. 9, an apparatus 900 for selecting a charging station includes: an acquiring unit 901, configured to acquire a battery charging request; a fifth determining unit 902, configured to determine environment state information corresponding to each charging station in a charging station set; a sixth determining unit 903, configured to determine through a trained information adjustment model corresponding to the each charging station, for the each charging station in the charging station set, target operational information of the each charging station for the battery charging request according to the environment state information of the charging station, wherein, on a basis that charging stations in the charging station set perceive environment state information of each other, the trained information adjustment model is obtained by performing multi-agent reinforcement learning based on a deep deterministic policy gradient algorithm; a displaying unit 904, configured to display the target operational information of the each charging station in the charging station set for the battery charging request; and a receiving unit 905, configured to receive a selection instruction and determine a target charging station from the charging station set according to the selection instruction.

In this embodiment, the target operational information is determined in real time for the charging station through the trained information adjustment model, which improves the real-time performance and rationality of the target operational information. At the same time, the coordination among the charging stations in the charging station set is improved, which helps to solve the problem of uncoordinated battery charging among the charging stations, thereby improving the utilization rate of the charging stations.

According to an embodiment of the present invention, an electronic device is provided. The electronic device includes at least one processor, and a storage device in communication with the at least one processor. Here, the storage device stores instructions executable by the at least one processor, and the instructions are executed by the at least one processor, to enable the at least one processor to implement the method for training an information adjustment model of a charging station and/or the method for selecting a charging station described in any of the above embodiments.

According to an embodiment of the present invention, a readable storage medium is provided. The readable storage medium stores a computer instruction. Here, the computer instruction is used to enable a computer to implement the method for training an information adjustment model of a charging station and/or the method for selecting a charging station described in any of the above embodiments.

An embodiment of the present invention provides a computer program product. The computer program, when executed by a processor, can implement the method for training an information adjustment model of a charging station and/or the method for selecting a charging station described in any of the above embodiments.

Fig. 10 is a schematic block diagram of an example electronic device 1000 that may be used to implement embodiments of the present invention. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present invention as described and/or claimed herein.

As shown in Fig. 10, the device 1000 includes a computation unit 1001, which may execute various appropriate actions and processes in accordance with a program stored in a read-only memory (ROM) 1002 or a program loaded into a random access memory (RAM)1003 from a storage portion 1008. The RAM 1003 also stores various programs and data required by operations of the device 1000. The computation unit 1001, the ROM 1002 and the RAM 1003 are connected to each other through a bus 1004. An input/output (I/O) interface 1005 is also connected to the bus 1004.

The following components are connected to the I/O interface 1005: an input unit 1006 including a keyboard, a mouse etc.; an output unit 1007 comprising various types of display device, a speaker etc.; a storage unit 1008 including a disk, an optical disk, and the like; and a communication unit 1009, such as a network card, a modem, a wireless communication transceiver, etc. The communication unit 1009 allows the device 1000 to exchange information/data with other devices through a computer network such as the internet and/or various telecommunication networks.

The computation unit 1001 may be various general-purpose and/or dedicated processing components having processing and computing capabilities. Some examples of the computation unit 1001 include, but are not limited to, central processing unit (CPU), graphics processing unit (GPU), various dedicated artificial intelligence (AI) computing chips, various computation units running machine learning model algorithms, digital signal processors (DSP), and any appropriate processors, controllers, microcontrollers, etc. The computation unit 1001 performs the various methods and processes described above, such as the method for training an information adjustment model of a charging station. For example, in some embodiments, the method for training an information adjustment model of a charging station may be implemented as a computer software program, which is tangibly included in a machine readable medium, such as the storage unit 1008. In some embodiments, part or all of the computer program may be loaded and/or installed on the device 1000 via the ROM 1002 and/or the communication unit 1009. When the computer program is loaded into the RAM 1003 and executed by the computation unit 1001, one or more steps of the method for training an information adjustment model of a charging station may be performed. Alternatively, in other embodiments, the computation unit 1001 may be configured to perform the method for training an information adjustment model of a charging station by any other appropriate means (for example, by means of firmware).

Various systems and technologies described above in embodiments of the present invention can be implemented in digital electronic circuit systems, integrated circuit systems, field programmable gate arrays (FPGAs), application specific integrated circuits (ASIC), application specific standard products (ASSP), system on chip (SOC), load programmable logic devices (CPLD), computer hardware, firmware, software, and/or combinations thereof. These various embodiments may include: being implemented in one or more computer programs, the one or more computer programs can be executed and/or interpreted on a programmable system including at least one programmable processor, which can be a special-purpose or general-purpose programmable processor, and can receive data and instructions from the storage system, at least one input device, and at least one output device, and transmitting data and instructions to the storage system, the at least one input device, and the at least one output device.

The program code for implementing the methods described in embodiments of the present invention may be written in any combination of one or more programming languages. These program codes can be provided to the processor or controller of general-purpose computer, special-purpose computer or other programmable data processing device, so that when the program code is executed by the processor or controller, the functions/operations specified in the flow chart and/or block diagram are implemented. The program code can be completely executed on the machine, partially executed on the machine, partially executed on the machine and partially executed on the remote machine as a separate software package, or completely executed on the remote machine or server.

In the context of the present invention, a machine-readable medium may be a tangible medium that may contain or store a program for use by or in combination with an instruction execution system, apparatus, or device. The machine-readable medium can be a machine-readable signal medium or a machine-readable storage medium. Machine readable media may include, but are not limited to, electronic, magnetic, optical, electromagnetic, infrared, or semiconductor systems, apparatuses, or devices, or any suitable combination of the foregoing. More specific examples of machine-readable storage media may include one or more wire based electrical connections, portable computer disks, hard disks, random access memory (RAM), read only memory (ROM), erasable programmable read only memory (EPROM or flash memory), optical fibers, compact disk read only memory (CD-ROM), optical storage devices, magnetic storage devices, or any suitable combination of the above.

In order to provide interaction with users, the systems and techniques described herein can be implemented on a computer with: a display device for displaying information to users (for example, a CRT (cathode ray tube) or LCD (liquid crystal display) monitor); and a keyboard and a pointing device (e.g., a mouse or a trackball) through which the user can provide input to the computer. Other kinds of devices can also be used to provide interaction with users. For example, the feedback provided to the user may be any form of sensor feedback (e.g., visual feedback, auditory feedback, or tactile feedback); and the input from the user can be received in any form (including acoustic input, voice input or tactile input).

The systems and techniques described herein may be implemented in a computing system including background components (e.g., as a data server), or a computing system including middleware components (e.g., an application server) or a computing system including a front-end component (e.g., a user computer with a graphical user interface or a web browser through which a user can interact with embodiments of the systems and techniques described herein), or a computing system including any combination of the backend component, the middleware component, the front-end component. The components of the system can be interconnected by digital data communication (e.g., communication network) in any form or medium. Examples of communication networks include local area networks (LANs), wide area networks (WANs), and the Internet.

A computer system may include a client and a server. The client and the server are generally far away from each other and usually interact through communication networks. The relationship between the client and the server is generated by computer programs running on the corresponding computers and having a client server relationship with each other. The server can be a cloud server, also known as cloud computing server or virtual machine, which is a host product in the cloud computing service system, to solve the defects of the traditional physical host and virtual private server (VPS, Virtual Private Server) services, such as high management difficulty and weak service scalability. The server may also be a server of a distributed system or a server combined with a blockchain.

According to the technical solution of the embodiment of the present invention, a method for training an information adjustment model of a charging station is provided. A charging station is used as an agent, and multi-agent reinforcement learning is performed based on a deep deterministic policy gradient algorithm, to train and obtain a policy network that can determine target operational information in real time as an information adjustment model, thereby improving the real-time performance and rationality of the charging station in determining the target operational information. In the model training phase, the goal is to maximize the cumulative reward of the charging station set as a whole, and thus the agents can perceive each other and the whole environment information, which improves the coordination among the charging stations in the charging station set and helps to solve the problem of uncoordinated battery charging among the charging stations, thereby improving the utilization rate of the charging stations.

## Claims

1. A computer-implemented method for training an information adjustment model of a charging station, comprising:

   acquiring (201, 601; 701) a battery charging request, and determining (702) environment state information corresponding to each charging station in a charging station set, wherein the environment state information of the charging station comprises: a current time, a number of current idle charging spots at the charging station, a number of battery charging requests in a future preset time period in a vicinity of the charging station, an estimated traveling time from a location of a current battery charging request to the charging station, a charging power of the charging station, a current electricity unit-price of the charging station, and a number of rechargeable vehicles heading for the charging station;
   determining (202, 602), through an initial policy network, target operational information of the each charging station in the charging station set for the battery charging request, according to the environment state information corresponding to the each charging station in the charging station set;
   determining (203), through an initial value network, a cumulative reward expectation corresponding to the battery charging request according to the environment state information and the target operational information corresponding to the each charging station in the charging station set;
   training (204) the initial policy network and the initial value network by using a deep deterministic policy gradient algorithm, to obtain a trained policy network and a trained value network, wherein, during the training, the initial value network is updated through a temporal difference method, and the initial policy network is updated with a goal of maximizing the cumulative reward expectation corresponding to the battery charging request, wherein the goal of said training is maximizing the cumulative reward of the charging station set as a whole, thereby improving an utilization rate of the charging stations;
   determining (205) the trained policy network as an information adjustment model corresponding to the each charging station in the charging station set;
   for the each charging station in the charging station set, determining (703), through the information adjustment model corresponding to the each charging station, target operational information of the each charging station for the new battery charging request according to the environment state information of the charging station, wherein, on a basis that charging stations in the charging station set perceive environment state information of each other, the information adjustment model is obtained by performing multi-agent reinforcement learning based on a deep deterministic policy gradient algorithm;

displaying (704) the target operational information of the each charging station in the charging station set for the new battery charging request; and

receiving (705) a selection instruction and determining a target charging station from the charging station set according to the selection instruction.

2. The method according to claim 1, wherein the determining (203), through an initial value network, a cumulative reward expectation corresponding to the battery charging request according to the environment state information and the target operational information corresponding to the each charging station in the charging station set comprises:

determining, through an agent pooling module, integrated representation information representing all charging stations in the charging station set according to the environment state information and the target operational information corresponding to the each charging station in the charging station set; and

determining, through the initial value network, the cumulative reward expectation corresponding to the battery charging request according to the integrated representation information.

3. The method according to claim 2, wherein the determining, through an agent pooling module, integrated representation information representing all charging stations in the charging station set according to the environment state information and the target operational information corresponding to the each charging station in the charging station set comprises:

mapping (603), through a mapping vector, the environment state information and the target operational information corresponding to the each charging station in the charging station set to a score feature representing an importance of the each charging station;

determining (604) a preset number of charging stations from the charging station set according to the score feature, and determining environment state information, target operational information and a score feature corresponding to the preset number of charging stations;

normalizing (605) the score feature corresponding to the preset number of charging stations to obtain a gate control vector;

determining (606) a gate control feature according to the environment state information, the target operational information, and the gate control vector corresponding to the preset number of charging stations; and

determining (607) the integrated representation information of all the charging stations in the charging station set according to the gate control feature.

4. The method according to claim 2 or 3, wherein the training the initial policy network and the initial value network by using a deep deterministic policy gradient algorithm comprises:

determining (609) a first loss corresponding to the initial value network through the temporal difference method;

determining (610) a second loss corresponding to the agent pooling module through a self-supervised contrastive learning method;

updating (611) the initial value network and the agent pooling module according to the first loss and the second loss; and

updating (612) the initial policy network with the goal of maximizing the cumulative reward expectation corresponding to the battery charging request.

5. The method according to claim 4, wherein the determining (610) a second loss corresponding to the agent pooling module through a self-supervised contrastive learning method comprises:

determining, for a first subset in a joint feature, first integrated representation information through the agent pooling module, wherein the joint feature comprises the environment state information and the target operational information corresponding to the each charging station in the charging station set;

determining, for a second subset in the joint feature, second integrated representation information through the agent pooling module;

determining, for a third subset in a joint feature corresponding to another battery charging request different from the battery charging request, third integrated representation information through the agent pooling module; and

using a self-supervised contrastive learning loss as the second loss, the self-supervised contrastive learning loss being determined according to the first integrated representation information, the second integrated representation information, and the third integrated representation information.

6. The method according to claim 4 or 5, wherein the determining (609) a first loss corresponding to the initial value network through the temporal difference method comprises:

determining, through a preset reward function, reward information according to a battery charging behavior of a charging object corresponding to the battery charging request, wherein the each charging station in the charging station set shares the reward information, and the preset reward function provides a different reward for a different battery charging behavior; and

determining, through the temporal difference method, the first loss corresponding to the initial value network according to the cumulative reward expectation corresponding to the battery charging request, a reward corresponding to the battery charging request, and a cumulative reward expectation corresponding to a battery charging request next to the battery charging request.

7. An apparatus for training an information adjustment model of a charging station, comprising:

a first determining unit (801; 901, 902), configured to acquire (201, 601) a battery charging request, and determine environment state information corresponding to each charging station in a charging station set, wherein the environment state information of the charging station comprises: current time, a number of current idle charging spots at the charging station, a number of battery charging requests in a future preset time period in a vicinity of the charging station, an estimated traveling time from a location of a current battery charging request to the charging station, a charging power of the charging station, a current electricity unit-price of the charging station, and a number of rechargeable vehicles heading for the charging station;

a second determining unit (802), configured to determine (202, 602), through an initial policy network, target operational information of the each charging station in the charging station set for the battery charging request, according to the environment state information corresponding to the each charging station in the charging station set;

a third determining unit (803), configured to determine (203), through an initial value network, a cumulative reward expectation corresponding to the battery charging request according to the environment state information and the target operational information corresponding to the each charging station in the charging station set;

a training unit (804), configured to train (204) the initial policy network and the initial value network by using a deep deterministic policy gradient algorithm, to obtain a trained policy network and a trained value network, wherein, during the training, the initial value network is updated through a temporal difference method, and the initial policy network is updated with a goal of maximizing the cumulative reward expectation corresponding to the battery charging request, wherein the goal of said training is maximizing the cumulative reward of the charging station set as a whole, thereby improving an utilization rate of the charging stations;

a fourth determining unit (805), configured to determine (205) the trained policy network as an information adjustment model corresponding to the each charging station in the charging station set;

a fifth determining unit (903), configured to determine (703) through a trained information adjustment model corresponding to the each charging station, for the each charging station in the charging station set, target operational information of the each charging station for the new battery charging request according to the environment state information of the charging station, wherein, on a basis that charging stations in the charging station set perceive environment state information of each other, the information adjustment model is obtained by performing multi-agent reinforcement learning based on a deep deterministic policy gradient algorithm;

a displaying unit (904), configured to display (704) the target operational information of the each charging station in the charging station set for the new battery charging request; and

a receiving unit (905), configured to receive (705) a selection instruction and determine a target charging station from the charging station set according to the selection instruction.

8. The apparatus according to claim 7, wherein the third determining unit (803) is further configured to:

determine, through an agent pooling module, integrated representation information representing all charging stations in the charging station set according to the environment state information and the target operational information corresponding to the each charging station in the charging station set; and determine, through the initial value network, the cumulative reward expectation corresponding to the battery charging request according to the integrated representation information.

9. The apparatus according to claim 7 or 8, wherein the third determining unit (803) is further configured to:

map (603), through a mapping vector, the environment state information and the target operational information corresponding to the each charging station in the charging station set to a score feature representing an importance of the each charging station;
determine (604) a preset number of charging stations from the charging station set according to the score feature, and determine environment state information, target operational information and a score feature corresponding to the preset number of charging stations; normalize (605) the score feature corresponding to the preset number of charging stations to obtain a gate control vector; determine (606) a gate control feature according to the environment state information, the target operational information, and the gate control vector corresponding to the preset number of charging stations; and determine (607) the integrated representation information of all the charging stations in the charging station set according to the gate control feature.

10. The apparatus according to any of claims 7 to 9, wherein the training unit (804) is further configured to:
determine (609) a first loss corresponding to the initial value network through the temporal difference method; determine (610) a second loss corresponding to the agent pooling module through a self-supervised contrastive learning method; update (611) the initial value network and the agent pooling module according to the first loss and the second loss; and update (612) the initial policy network with the goal of maximizing the cumulative reward expectation corresponding to battery the charging request.

11. The apparatus according to any of claims 7 to 10, wherein the training unit (804) is further configured to:
determine, for a first subset in a joint feature, first integrated representation information through the agent pooling module, wherein the joint feature comprises the environment state information and the target operational information corresponding to the each charging station in the charging station set; determine, for a second subset in the joint feature, second integrated representation information through the agent pooling module; determine, for a third subset in a joint feature corresponding to another battery charging request different from the battery charging request, third integrated representation information through the agent pooling module; and use a self-supervised contrastive learning loss as the second loss, the self-supervised contrastive learning loss being determined according to the first integrated representation information, the second integrated representation information and the third integrated representation information.

12. A non-transitory computer readable storage medium, storing a computer instruction, wherein the computer instruction is used to cause the computer to perform the method according to any one of claims 1-6.

13. A computer program product, comprising a computer program, wherein the computer program, when executed by a processor, implements the method according to any one of claims 1-6.

**Patentansprüche**

1. Computerimplementiertes Verfahren zum Trainieren eines Informationsanpassungsmodells einer Ladestation, das Folgendes umfasst:

Erfassen (201, 601; 701) einer Batterieladeanforderung und Bestimmen (702) von Umgebungszustandsinformationen, die jeder Ladestation in einem Satz von Ladestationen entsprechen, wobei die Umgebungszustandsinformationen der Ladestation Folgendes umfassen: eine aktuelle Zeit, eine Anzahl von aktuellen Leerlaufladepunkten an der Ladestation, eine Anzahl von Batterieladeanforderungen in einem zukünftigen voreingestellten Zeitraum in einer Nähe der Ladestation, eine geschätzte Reisezeit von einem Ort einer aktuellen Batterieladeanforderung zu der Ladestation, eine Ladeleistung der Ladestation, einen aktuellen Stromeinheitspreis der Ladestation und eine Anzahl von wiederaufladbaren Fahrzeugen, die sich auf die Ladestation bewegen;
Bestimmen (202, 602), durch ein anfängliches Richtliniennetzwerk, von Zielbetriebsinformationen jeder Ladestation in dem Satz von Ladestationen für die Batterieladeanforderung gemäß den Umgebungszustandsinformationen, die jeder Ladestation in dem Satz von Ladestationen entsprechen;
Bestimmen (203), durch ein anfängliches Wertenetzwerk, einer kumulativen Belohnungserwartung, die der Batterieladeanforderung entspricht, gemäß den Umgebungszustandsinformationen und den Zielbetriebsinformationen, die jeder Ladestation in dem Satz von Ladestationen entsprechen;
Trainieren (204) des anfänglichen Richtliniennetzwerks und des anfänglichen Wertenetzwerks durch Verwenden eines tiefen deterministischen Richtliniengradientenalgorithmus, um ein trainiertes Richtliniennetzwerk und ein trainiertes Wertenetzwerk zu erhalten, wobei während des Trainierens das anfängliche Wertenetzwerk durch ein zeitliches Differenzverfahren aktualisiert wird und das anfängliche Richtliniennetzwerk mit einem Ziel des Maximierens der kumulativen Belohnungserwartung, die der Batterieladeanforderung entspricht, aktualisiert wird, wobei das Ziel des Trainierens das Maximieren der kumulativen Belohnung des Satzes von Ladestationen als Ganzes ist, wodurch eine Auslastungsrate der Ladestationen verbessert wird;

Bestimmen (205) des trainierten Richtliniennetzwerks als ein Informationsanpassungsmodell, das jeder Ladestation in dem Satz von Ladestationen entspricht;

für jede Ladestation in dem Satz von Ladestationen, Bestimmen (703), durch das Informationsanpassungsmodell, das jeder Ladestation entspricht, von Zielbetriebsinformationen jeder Ladestation für die neue Batterieladeanforderung gemäß den Umgebungszustandsinformationen der Ladestation, wobei auf einer Grundlage, dass Ladestationen in dem Satz von Ladestationen Umgebungszustandsinformationen voneinander wahrnehmen, das Informationsanpassungsmodell durch Durchführen von Mehragentenverstärkungslernen basierend auf einem tiefen deterministischen Richtliniengradientenalgorithmus erhalten wird;

Anzeigen (704) der Zielbetriebsinformationen jeder Ladestation in dem Satz von Ladestationen für die neue Batterieladeanforderung; und

Empfangen (705) einer Auswahlanweisung und Bestimmen einer Zielladestation aus dem Satz von Ladestationen gemäß der Auswahlanweisung.

2. Verfahren nach Anspruch 1, wobei das Bestimmen (203), durch ein anfängliches Wertenetzwerk, einer kumulativen Belohnungserwartung, die der Batterieladeanforderung entspricht, gemäß den Umgebungszustandsinformationen und den Zielbetriebsinformationen, die jeder Ladestation in dem Satz von Ladestationen entsprechen, Folgendes umfasst:

Bestimmen, durch ein Agentenbündelungsmodul, von integrierten Darstellungsinformationen, die alle Ladestationen in dem Satz von Ladestationen darstellen, gemäß den Umgebungszustandsinformationen und den Zielbetriebsinformationen, die jeder Ladestation in dem Satz von Ladestationen entsprechen; und

Bestimmen, durch das anfängliche Wertenetzwerk, der kumulativen Belohnungserwartung, die der Batterieladeanforderung entspricht, gemäß den integrierten Darstellungsinformationen.

3. Verfahren nach Anspruch 2, wobei das Bestimmen, durch ein Agentenbündelungsmodul, von integrierten Darstellungsinformationen, die alle Ladestationen in dem Satz von Ladestationen darstellen, gemäß den Umgebungszustandsinformationen und den Zielbetriebsinformationen, die jeder Ladestation in dem Satz von Ladestationen entsprechen, Folgendes umfasst:

Abbilden (603), durch einen Abbildungsvektor, der Umgebungszustandsinformationen und der Zielbetriebsinformationen, die jeder Ladestation in dem Satz von Ladestationen entsprechen, auf ein Bewertungsmerkmal, das eine Wichtigkeit jeder Ladestation darstellt;

Bestimmen (604) einer voreingestellten Anzahl von Ladestationen aus dem Satz von Ladestationen gemäß dem Bewertungsmerkmal und Bestimmen von Umgebungszustandsinformationen, Zielbetriebsinformationen und einem Bewertungsmerkmal, das der voreingestellten Anzahl von Ladestationen entspricht;

Normalisieren (605) des Bewertungsmerkmals, das der voreingestellten Anzahl von Ladestationen entspricht, um einen Gate-Steuervektor zu erhalten;

Bestimmen (606) eines Gate-Steuermerkmals gemäß den Umgebungszustandsinformationen, den Zielbetriebsinformationen und dem Gate-Steuervektor, der der voreingestellten Anzahl von Ladestationen entspricht; und

Bestimmen (607) der integrierten Darstellungsinformationen aller Ladestationen in dem Satz von Ladestationen gemäß dem Gate-Steuermerkmal.

4. Verfahren nach Anspruch 2 oder 3, wobei das Trainieren des anfänglichen Richtliniennetzwerks und des anfänglichen Wertenetzwerks durch Verwenden eines tiefen deterministischen Richtliniengradientenalgorithmus Folgendes umfasst:

Bestimmen (609) eines ersten Verlusts, der dem anfänglichen Wertenetzwerk entspricht, durch das zeitliche Differenzverfahren;

Bestimmen (610) eines zweiten Verlusts, der dem Agentenbündelungsmodul entspricht, durch ein selbstüberwachtes Kontrastlernverfahren;

Aktualisieren (611) des anfänglichen Wertenetzwerks und des Agentenbündelungsmoduls gemäß dem ersten Verlust und dem zweiten Verlust; und

Aktualisieren (612) des anfänglichen Richtliniennetzwerks mit dem Ziel des Maximierens der kumulativen Belohnungserwartung, die der Batterieladeanforderung entspricht.

5. Verfahren nach Anspruch 4, wobei das Bestimmen (610) eines zweiten Verlusts, der dem Agentenbündelungsmodul entspricht, durch ein selbstüberwachtes Kontrastlernverfahren Folgendes umfasst:

Bestimmen, für eine erste Teilmenge in einem gemeinsamen Merkmal, von ersten integrierten Darstellungsinformationen durch das Agentenbündelungsmodul, wobei das gemeinsame Merkmal die Umgebungszustandsinformationen und die Zielbetriebsinformationen umfasst, die jeder Ladestation in dem Satz von Ladestationen entsprechen;

Bestimmen, für eine zweite Teilmenge in dem gemeinsamen Merkmal, von zweiten integrierten Darstellungsinformationen durch das Agentenbündelungsmodul;

Bestimmen, für eine dritte Teilmenge in einem gemeinsamen Merkmal, die einer anderen Batterieladeanforderung entspricht, die sich von der Batterieladeanforderung unterscheidet, von dritten integrierten Darstellungsinformationen durch das Agentenbündelungsmodul; und

Verwenden eines selbstüberwachten Kontrastlernverlusts als den zweiten Verlust, wobei der selbstüberwachte Kontrastlernverlust gemäß den ersten integrierten Darstellungsinformationen, den zweiten integrierten Darstellungsinformationen und den dritten integrierten Darstellungsinformationen bestimmt wird.

6. Verfahren nach Anspruch 4 oder 5, wobei das Bestimmen (609) eines ersten Verlusts, der dem anfänglichen Wertenetzwerk entspricht, durch das zeitliche Differenzverfahren Folgendes umfasst:

Bestimmen, durch eine voreingestellte Belohnungsfunktion, von Belohnungsinformationen gemäß einem Batterieladeverhalten eines Ladeobjekts, das der Batterieladeanforderung entspricht, wobei jede Ladestation in dem Satz von Ladestationen die Belohnungsinformationen gemeinsam nutzt und die voreingestellte Belohnungsfunktion eine andere Belohnung für ein anderes Batterieladeverhalten bereitstellt; und

Bestimmen, durch das zeitliche Differenzverfahren, des ersten Verlusts, der dem anfänglichen Wertenetzwerk entspricht, gemäß der kumulativen Belohnungserwartung, die der Batterieladeanforderung entspricht, einer Belohnung, die der Batterieladeanforderung entspricht, und einer kumulativen Belohnungserwartung, die einer Batterieladeanforderung neben der Batterieladeanforderung entspricht.

7. Vorrichtung zum Trainieren eines Informationsanpassungsmodells einer Ladestation, die Folgendes umfasst:

eine erste Bestimmungseinheit (801; 901, 902), die konfiguriert ist, um eine Batterieladeanforderung zu erfassen (201, 601) und Umgebungszustandsinformationen zu bestimmen, die jeder Ladestation in einem Satz von Ladestationen entsprechen, wobei die Umgebungszustandsinformationen der Ladestation Folgendes umfassen: eine aktuelle Zeit, eine Anzahl von aktuellen Leerlaufladepunkten an der Ladestation, eine Anzahl von Batterieladeanforderungen in einem zukünftigen voreingestellten Zeitraum in einer Nähe der Ladestation, eine geschätzte Reisezeit von einem Ort einer aktuellen Batterieladeanforderung zu der Ladestation, eine Ladeleistung der Ladestation, einen aktuellen Stromeinheitspreis der Ladestation und eine Anzahl von wiederaufladbaren Fahrzeugen, die sich auf die Ladestation bewegen;

eine zweite Bestimmungseinheit (802), die konfiguriert ist, um durch ein anfängliches Richtliniennetzwerk Zielbetriebsinformationen jeder Ladestation in dem Satz von Ladestationen für die Batterieladeanforderung gemäß den Umgebungszustandsinformationen, die jeder Ladestation in dem Satz von Ladestationen entsprechen, zu bestimmen (202, 602);

eine dritte Bestimmungseinheit (803), die konfiguriert ist, um durch ein anfängliches Wertenetzwerk eine kumulative Belohnungserwartung, die der Batterieladeanforderung entspricht, gemäß den Umgebungszustandsinformationen und den Zielbetriebsinformationen, die jeder Ladestation in dem Satz von Ladestationen entsprechen, zu bestimmen (203);

eine Trainingseinheit (804), die konfiguriert ist, um das anfängliche Richtliniennetzwerk und das anfängliche Wertenetzwerk durch Verwenden eines tiefen deterministischen Richtliniengradientenalgorithmus zu trainieren (204), um ein trainiertes Richtliniennetzwerk und ein trainiertes Wertenetzwerk zu erhalten, wobei während des Trainierens das anfängliche Wertenetzwerk durch ein zeitliches Differenzverfahren aktualisiert wird und das anfängliche Richtliniennetzwerk mit einem Ziel des Maximierens der kumulativen Belohnungserwartung, die der Batterieladeanforderung entspricht, aktualisiert wird, wobei das Ziel des Trainierens das Maximieren der kumulativen Belohnung des Satzes von Ladestationen als Ganzes ist, wodurch eine Auslastungsrate der Ladestationen verbessert wird;

eine vierte Bestimmungseinheit (805), die konfiguriert ist, um das trainierte Richtliniennetzwerk als ein Informationsanpassungsmodell, das jeder Ladestation in dem Satz von Ladestationen entspricht, zu bestimmen (205);

eine fünfte Bestimmungseinheit (903), die konfiguriert ist, um durch ein trainiertes Informationsanpassungsmodell, das jeder Ladestation entspricht, für jede Ladestation in dem Satz von Ladestationen Zielbetriebsinformationen jeder Ladestation für die neue Batterieladeanforderung gemäß den Umgebungszustandsinformationen der Ladestation zu bestimmen (703), wobei auf einer Grundlage, dass Ladestationen in dem Satz von Ladestationen Umgebungszustandsinformationen voneinander wahrnehmen, das Informationsanpassungsmodell durch Durchführen von Mehragentenverstärkungslernen basierend auf einem tiefen deterministischen Richtliniengradientenalgorithmus erhalten wird;

eine Anzeigeeinheit (904), die konfiguriert ist, um die Zielbetriebsinformationen jeder Ladestation in dem Satz von Ladestationen für die neue Batterieladeanforderung anzuzeigen (704); und

eine Empfangseinheit (905), die konfiguriert ist, um eine Auswahlanweisung zu empfangen (705) und eine Zielladestation aus dem Satz von Ladestationen gemäß der Auswahlanweisung zu bestimmen.

8. Vorrichtung nach Anspruch 7, wobei die dritte Bestimmungseinheit (803) ferner konfiguriert ist, um:
durch ein Agentenbündelungsmodul integrierte Darstellungsinformationen, die alle Ladestationen in dem Satz von Ladestationen darstellen, gemäß den Umgebungszustandsinformationen und den Zielbetriebsinformationen, die jeder Ladestation in dem Satz von Ladestationen entsprechen, zu bestimmen; und durch das anfängliche Wertenetzwerk die kumulative Belohnungserwartung, die der Batterieladeanforderung entspricht, gemäß den integrierten Darstellungsinformationen zu bestimmen.

9. Vorrichtung nach Anspruch 7 oder 8, wobei die dritte Bestimmungseinheit (803) ferner konfiguriert ist, um:
durch einen Abbildungsvektor die Umgebungszustandsinformationen und die Zielbetriebsinformationen, die jeder Ladestation in dem Satz von Ladestationen entsprechen, auf ein Bewertungsmerkmal abzubilden (603), das eine Wichtigkeit jeder Ladestation darstellt; eine voreingestellte Anzahl von Ladestationen aus dem Satz von Ladestationen gemäß dem Bewertungsmerkmal zu bestimmen (604) und Umgebungszustandsinformationen, Zielbetriebsinformationen und ein Bewertungsmerkmal, das der voreingestellten Anzahl von Ladestationen entspricht, zu bestimmen; das Bewertungsmerkmal, das der voreingestellten Anzahl von Ladestationen entspricht, zu normalisieren (605), um einen Gate-Steuervektor zu erhalten; ein Gate-Steuermerkmal gemäß den Umgebungszustandsinformationen, den Zielbetriebsinformationen und dem Gate-Steuervektor, der der voreingestellten Anzahl von Ladestationen entspricht, zu bestimmen (606); und die integrierten Darstellungsinformationen aller Ladestationen in dem Satz von Ladestationen gemäß dem Gate-Steuermerkmal zu bestimmen (607).

10. Vorrichtung nach einem der Ansprüche 7 bis 9, wobei die Trainingseinheit (804) ferner konfiguriert ist, um:
einen ersten Verlust, der dem anfänglichen Wertenetzwerk entspricht, durch das zeitliche Differenzverfahren zu bestimmen (609); einen zweiten Verlust, der dem Agentenbündelungsmodul entspricht, durch ein selbstüberwachtes Kontrastlernverfahren zu bestimmen (610); das anfängliche Wertenetzwerk und das Agentenbündelungsmodul gemäß dem ersten Verlust und dem zweiten Verlust zu aktualisieren (611); und das anfängliche Richtliniennetzwerk mit dem Ziel des Maximierens der kumulativen Belohnungserwartung, die der Batterieladeanforderung entspricht, zu aktualisieren (612).

11. Vorrichtung nach einem der Ansprüche 7 bis 10, wobei die Trainingseinheit (804) ferner konfiguriert ist, um:
für eine erste Teilmenge in einem gemeinsamen Merkmal, erste integrierte Darstellungsinformationen durch das Agentenbündelungsmodul zu bestimmen, wobei das gemeinsame Merkmal die Umgebungszustandsinformationen und die Zielbetriebsinformationen umfasst, die jeder Ladestation in dem Satz von Ladestationen entsprechen; für eine zweite Teilmenge in dem gemeinsamen Merkmal, zweite integrierte Darstellungsinformationen durch das Agentenbündelungsmodul zu bestimmen; für eine dritte Teilmenge in einem gemeinsamen Merkmal, die einer anderen Batterieladeanforderung entspricht, die sich von der Batterieladeanforderung unterscheidet, dritte integrierte Darstellungsinformationen durch das Agentenbündelungsmodul zu bestimmen; und einen selbstüberwachten Kontrastlernverlust als den zweiten Verlust zu verwenden, wobei der selbstüberwachte Kontrastlernverlust gemäß den ersten integrierten Darstellungsinformationen, den zweiten integrierten Darstellungsinformationen und den dritten integrierten Darstellungsinformationen bestimmt wird.

12. Nichtflüchtiges computerlesbares Speichermedium, das eine Computeranweisung speichert, wobei die Computeranweisung verwendet wird, um den Computer zu veranlassen, das Verfahren nach einem der Ansprüche 1-6 durchzuführen.

13. Computerprogrammprodukt, das ein Computerprogramm umfasst, wobei das Computerprogramm, wenn es von einem Prozessor ausgeführt wird, das Verfahren nach einem der Ansprüche 1-6 implementiert.

**Revendications**

1. Procédé mis en œuvre par ordinateur pour former un modèle d'ajustement d'informations d'une station de charge, comprenant :

   l'acquisition (201, 601 ; 701) d'une demande de charge de batterie, et la détermination (702) d'informations d'état d'environnement correspondant à chaque station de charge dans un ensemble de stations de charge, dans lequel les informations d'état d'environnement de la station de charge comprennent : un temps actuel, un nombre de points de charge inactifs actuels au niveau de la station de charge, un nombre de demandes de charge de batterie dans une période de temps prédéfinie future à proximité de la station de charge, un temps de déplacement estimé à partir d'un emplacement d'une demande de charge de batterie actuelle jusqu'à la station de charge, une puissance de charge de la station de charge, un prix unitaire d'électricité actuel de la station de charge, et un nombre de véhicules rechargeables se dirigeant vers la station de charge ;
   la détermination (202, 602), par le biais d'un réseau de politiques initial, d'informations opérationnelles cibles de chaque station de charge dans l'ensemble de stations de charge pour la demande de charge de batterie, en fonction des informations d'état d'environnement correspondant à chaque station de charge dans l'ensemble de stations de charge ;
   la détermination (203), par le biais d'un réseau de valeurs initial, d'une espérance de récompense cumulative correspondant à la demande de charge de batterie en fonction des informations d'état d'environnement et des informations opérationnelles cibles correspondant à chaque station de charge dans l'ensemble de stations de charge ;
   la formation (204) du réseau de politiques initial et du réseau de valeurs initial en utilisant un algorithme de gradient de politiques déterministe profond, pour obtenir un réseau de politiques formé et un réseau de valeurs formé, dans lequel, pendant la formation, le réseau de valeurs initial est mis à jour par le biais d'un procédé de différence temporelle, et le réseau de politiques initial est mis à jour avec un objectif de maximisation de l'espérance de récompense cumulative correspondant à la demande de charge de batterie, dans lequel l'objectif de ladite formation est de maximiser la récompense cumulative de l'ensemble de stations de charge dans son ensemble, améliorant ainsi un taux d'utilisation des stations de charge ;
   la détermination (205) du réseau de politiques formé en tant que modèle d'ajustement d'informations correspondant à chaque station de charge dans l'ensemble de stations de charge ;
   pour chaque station de charge dans l'ensemble de stations de charge, la détermination (703), par le biais du modèle d'ajustement d'informations correspondant à chaque station de charge, d'informations opérationnelles cibles de chaque station de charge pour la nouvelle demande de charge de batterie en fonction des informations d'état d'environnement de la station de charge, dans lequel, sur une base selon laquelle des stations de charge dans l'ensemble de stations de charge perçoivent des informations d'état d'environnement les unes des autres, le modèle d'ajustement d'informations est obtenu en effectuant un apprentissage de renforcement multi-agent sur la base d'un algorithme de gradient de politiques déterministe profond ;
   l'affichage (704) des informations opérationnelles cibles de chaque station de charge dans l'ensemble de stations de charge pour la nouvelle demande de charge de batterie ; et
   la réception (705) d'une instruction de sélection et la détermination d'une station de charge cible à partir de l'ensemble de stations de charge en fonction de l'instruction de sélection.

2. Procédé selon la revendication 1, dans lequel la détermination (203), par le biais d'un réseau de valeurs initial, d'une espérance de récompense cumulative correspondant à la demande de charge de batterie en fonction des informations d'état d'environnement et des informations opérationnelles cibles correspondant à chaque station de charge dans l'ensemble de stations de charge comprend :

   la détermination, par le biais d'un module de regroupement d'agents, d'informations de représentation intégrée représentant toutes les stations de charge dans l'ensemble de stations de charge en fonction des informations d'état d'environnement et des informations opérationnelles cibles correspondant à chaque station de charge dans l'ensemble de stations de charge ; et
   la détermination, par le biais du réseau de valeurs initial, de l'espérance de récompense cumulative correspondant à la demande de charge de batterie en fonction des informations de représentation intégrée.

3. Procédé selon la revendication 2, dans lequel la détermination, par le biais d'un module de regroupement d'agents, d'informations de représentation intégrée représentant toutes les stations de charge dans l'ensemble de stations de charge en fonction des informations d'état d'environnement et des informations opérationnelles cibles correspondant à chaque station de charge dans l'ensemble de stations de charge comprend :

la mise en correspondance (603), par le biais d'un vecteur de mise en correspondance, des informations d'état d'environnement et des informations opérationnelles cibles correspondant à chaque station de charge dans l'ensemble de stations de charge avec une caractéristique de score représentant une importance de chaque station de charge ;

la détermination (604) d'un nombre prédéfini de stations de charge à partir de l'ensemble de stations de charge en fonction de la caractéristique de score, et la détermination d'informations d'état d'environnement, d'informations opérationnelles cibles et d'une caractéristique de score correspondant au nombre prédéfini de stations de charge ;

la normalisation (605) de la caractéristique de score correspondant au nombre prédéfini de stations de charge pour obtenir un vecteur de commande de porte ;

la détermination (606) d'une caractéristique de commande de porte en fonction des informations d'état d'environnement, des informations opérationnelles cibles et du vecteur de commande de porte correspondant au nombre prédéfini de stations de charge ; et

la détermination (607) des informations de représentation intégrée de toutes les stations de charge dans l'ensemble de stations de charge en fonction de la caractéristique de commande de porte.

4. Procédé selon la revendication 2 ou 3, dans lequel la formation du réseau de politiques initial et du réseau de valeurs initial en utilisant un algorithme de gradient de politiques déterministe profond comprend :

la détermination (609) d'une première perte correspondant au réseau de valeurs initial par le biais du procédé de différence temporelle ;

la détermination (610) d'une seconde perte correspondant au module de regroupement d'agents par le biais d'un procédé d'apprentissage contrasté auto-supervisé ;

la mise à jour (611) du réseau de valeurs initial et du module de regroupement d'agents en fonction de la première perte et de la seconde perte ; et

la mise à jour (612) du réseau de politiques initial avec l'objectif de maximisation de l'espérance de récompense cumulative correspondant à la demande de charge de batterie.

5. Procédé selon la revendication 4, dans lequel la détermination (610) d'une seconde perte correspondant au module de regroupement d'agents par le biais d'un procédé d'apprentissage contrasté auto-supervisé comprend :

la détermination, pour un premier sous-ensemble dans une caractéristique conjointe, de premières informations de représentation intégrée par le biais du module de regroupement d'agents, dans lequel la caractéristique conjointe comprend les informations d'état d'environnement et les informations opérationnelles cibles correspondant à chaque station de charge dans l'ensemble de stations de charge ;

la détermination, pour un deuxième sous-ensemble dans la caractéristique conjointe, de deuxièmes informations de représentation intégrée par le biais du module de regroupement d'agents ;

la détermination, pour un troisième sous-ensemble dans une caractéristique conjointe correspondant à une autre demande de charge de batterie différente de la demande de charge de batterie, de troisièmes informations de représentation intégrée par le biais du module de regroupement d'agents ; et

l'utilisation d'une perte d'apprentissage contrasté auto-supervisé en tant que seconde perte, la perte d'apprentissage contrasté auto-supervisé étant déterminée en fonction des premières informations de représentation intégrée, des deuxièmes informations de représentation intégrée et des troisièmes informations de représentation intégrée.

6. Procédé selon la revendication 4 ou 5, dans lequel la détermination (609) d'une première perte correspondant au réseau de valeurs initial par le biais du procédé de différence temporelle comprend :

la détermination, par le biais d'une fonction de récompense prédéfinie, d'informations de récompense en fonction d'un comportement de charge de batterie d'un objet de charge correspondant à la demande de charge de batterie, dans lequel chaque station de charge dans l'ensemble de stations de charge partage les informations de récompense, et la fonction de récompense prédéfinie fournit une récompense différente pour un comportement de charge de batterie différent ; et

la détermination, par le biais du procédé de différence temporelle, de la première perte correspondant au réseau de valeurs initial en fonction de l'espérance de récompense cumulative correspondant à la demande de charge de batterie, d'une récompense correspondant à la demande de charge de batterie et d'une espérance de récompense cumulative correspondant à une demande de charge de batterie suivant la demande de charge de batterie.

**7.** Appareil pour former un modèle d'ajustement d'informations d'une station de charge, comprenant :

une première unité de détermination (801 ; 901, 902), configurée pour acquérir (201, 601) une demande de charge de batterie, et déterminer des informations d'état d'environnement correspondant à chaque station de charge dans un ensemble de stations de charge, dans lequel les informations d'état d'environnement de la station de charge comprennent : un temps actuel, un nombre de points de charge inactifs actuels au niveau de la station de charge, un nombre de demandes de charge de batterie dans une période de temps prédéfinie future à proximité de la station de charge, un temps de déplacement estimé à partir d'un emplacement d'une demande de charge de batterie actuelle jusqu'à la station de charge, une puissance de charge de la station de charge, un prix unitaire d'électricité actuel de la station de charge, et un nombre de véhicules rechargeables se dirigeant vers la station de charge ;
une deuxième unité de détermination (802), configurée pour déterminer (202, 602), par le biais d'un réseau de politiques initial, des informations opérationnelles cibles de chaque station de charge dans l'ensemble de stations de charge pour la demande de charge de batterie, en fonction des informations d'état d'environnement correspondant à chaque station de charge dans l'ensemble de stations de charge ;
une troisième unité de détermination (803), configurée pour déterminer (203), par le biais d'un réseau de valeurs initial, une espérance de récompense cumulative correspondant à la demande de charge de batterie en fonction des informations d'état d'environnement et des informations opérationnelles cibles correspondant à chaque station de charge dans l'ensemble de stations de charge ;
une unité de formation (804), configurée pour former (204) le réseau de politiques initial et le réseau de valeurs initial en utilisant un algorithme de gradient de politiques déterministe profond, pour obtenir un réseau de politiques formé et un réseau de valeurs formé, dans lequel, pendant la formation, le réseau de valeurs initial est mis à jour par le biais d'un procédé de différence temporelle, et le réseau de politiques initial est mis à jour avec un objectif de maximisation de l'espérance de récompense cumulative correspondant à la demande de charge de batterie, dans lequel l'objectif de ladite formation est de maximiser la récompense cumulative de l'ensemble de stations de charge dans son ensemble, améliorant ainsi un taux d'utilisation des stations de charge ;
une quatrième unité de détermination (805), configurée pour déterminer (205) réseau de politiques formé en tant que modèle d'ajustement d'informations correspondant à chaque station de charge dans l'ensemble de stations de charge ;
une cinquième unité de détermination (903), configurée pour déterminer (703), par le biais d'un modèle d'ajustement d'informations formé correspondant à chaque station de charge, pour chaque station de charge dans l'ensemble de stations de charge, des informations opérationnelles cibles de chaque station de charge pour la nouvelle demande de charge de batterie en fonction des informations d'état d'environnement de la station de charge, dans lequel, sur une base selon laquelle des stations de charge dans l'ensemble de stations de charge perçoivent des informations d'état d'environnement les unes des autres, le modèle d'ajustement d'informations est obtenu en effectuant un apprentissage de renforcement multi-agent sur la base d'un algorithme de gradient de politiques déterministe profond ;
une unité d'affichage (904), configurée pour afficher (704) les informations opérationnelles cibles de chaque station de charge dans l'ensemble de stations de charge pour la nouvelle demande de charge de batterie ; et
une unité de réception (905), configurée pour recevoir (705) une instruction de sélection et déterminer une station de charge cible à partir de l'ensemble de stations de charge en fonction de l'instruction de sélection.

**8.** Appareil selon la revendication 7, dans lequel la troisième unité de détermination (803) est en outre configurée pour :
déterminer, par le biais d'un module de regroupement d'agents, des informations de représentation intégrée représentant toutes les stations de charge dans l'ensemble de stations de charge en fonction des informations d'état d'environnement et des informations opérationnelles cibles correspondant à chaque station de charge dans l'ensemble de stations de charge ; et déterminer, par le biais du réseau de valeurs initial, l'espérance de récompense cumulative correspondant à la demande de charge de batterie en fonction des informations de représentation intégrée.

**9.** Appareil selon la revendication 7 ou 8, dans lequel la troisième unité de détermination (803) est en outre configurée pour :

mettre en correspondance (603), par le biais d'un vecteur de mise en correspondance, des informations d'état d'environnement et des informations opérationnelles cibles correspondant à chaque station de charge dans l'ensemble de stations de charge avec une caractéristique de score représentant une importance de chaque station de charge ;
déterminer (604) un nombre prédéfini de stations de charge à partir de l'ensemble de stations de charge en fonction de la caractéristique de score, et déterminer des informations d'état d'environnement, des informations opérationnelles cibles et une caractéristique de score correspondant au nombre prédéfini de stations de charge ; normaliser (605) la caractéristique de score correspondant au nombre prédéfini de stations de charge pour obtenir un vecteur de commande de porte ; déterminer (606) une caractéristique de commande de porte en fonction des informations d'état d'environnement, des informations opérationnelles cibles et du vecteur de commande de porte correspondant au nombre prédéfini de stations de charge ; et déterminer (607) les informations de représentation intégrée de toutes les stations de charge dans l'ensemble de stations de charge en fonction de la caractéristique de commande de porte.

10. Appareil selon l'une quelconque des revendications 7 à 9, dans lequel l'unité de formation (804) est en outre configurée pour :
déterminer (609) une première perte correspondant au réseau de valeurs initial par le biais du procédé de différence temporelle ; déterminer (610) une seconde perte correspondant au module de regroupement d'agents par le biais d'un procédé d'apprentissage contrasté auto-supervisé ; mettre à jour (611) le réseau de valeurs initial et le module de regroupement d'agents en fonction de la première perte et de la seconde perte ; et mettre à jour (612) le réseau de politiques initial avec l'objectif de maximisation de l'espérance de récompense cumulative correspondant à la demande de charge de batterie.

11. Appareil selon l'une quelconque des revendications 7 à 10, dans lequel l'unité de formation (804) est en outre configurée pour :

déterminer, pour un premier sous-ensemble dans une caractéristique conjointe, des premières informations de représentation intégrée par le biais du module de regroupement d'agents, dans lequel la caractéristique conjointe comprend les informations d'état d'environnement et les informations opérationnelles cibles correspondant à chaque station de charge dans l'ensemble de stations de charge ;
déterminer, pour un deuxième sous-ensemble dans la caractéristique conjointe, des deuxièmes informations de représentation intégrée par le biais du module de regroupement d'agents ; déterminer, pour un troisième sous-ensemble dans une caractéristique conjointe correspondant à une autre demande de charge de batterie différente de la demande de charge de batterie, des troisièmes informations de représentation intégrée par le biais du module de regroupement d'agents ; et utiliser une perte d'apprentissage contrasté auto-supervisé en tant que seconde perte, la perte d'apprentissage contrasté auto-supervisé étant déterminée en fonction des premières informations de représentation intégrée, des deuxièmes informations de représentation intégrée et des troisièmes informations de représentation intégrée.

12. Support de stockage non transitoire lisible par ordinateur, stockant une instruction d'ordinateur, dans lequel l'instruction d'ordinateur est utilisée pour amener l'ordinateur à effectuer le procédé selon l'une quelconque des revendications 1 à 6.

13. Produit de programme informatique, comprenant un programme informatique, dans lequel le programme informatique, lorsqu'il est exécuté par un processeur, met en œuvre le procédé selon l'une quelconque des revendications 1 à 6.

Fig. 1

200

Acquire a battery charging request, and determine environment state information corresponding to each charging station in a charging station set

201

Determine, through an initial policy network, target operational information of the each charging station in the charging station set for the battery charging request, according to the environment state information corresponding to the each charging station in the charging station set

202

Determine, through an initial value network, a cumulative reward expectation corresponding to the battery charging request according to the environment state information corresponding to the each charging station in the charging station set and the target operational information

203

Train the initial policy network and the initial value network by using a deep deterministic policy gradient algorithm, to obtain a trained policy network and a trained value network

204

Determine the trained policy network as an information adjustment model corresponding to the each charging station in the charging station set

205

Fig. 2

Fig. 3

Fig. 4

Fig. 5

600

601

Acquire a battery charging request, and determine environment state information corresponding to each charging station in a charging station set

602

Determine, through an initial policy network, target operational information of the each charging station in the charging station set for the battery charging request, according to the environment state information corresponding to the each charging station in the charging station set

603

Map, through a mapping vector, the environment state information and the target operational information corresponding to the each charging station in the charging station set to a score feature representing an importance of the charging station

604

Determine a preset number of charging stations from the charging station set according to the score feature, and determine environment state information, target operational information and a score feature corresponding to the preset number of charging stations

605

Normalize the score feature corresponding to the preset number of charging stations to obtain a gate control vector

606

Determine a gate control feature according to the environment state information, the target operational information, and the gate control vector corresponding to the preset number of charging stations

607

Determine integrated representation information of all charging stations in the charging station set according to the gate control feature

608

Determine, through an initial value network, a cumulative reward expectation corresponding to the battery charging request according to the integrated representation information

609

Determine a first loss corresponding to the initial value network through a temporal difference method

610

Determine a second loss corresponding to an agent pooling module through a self-supervised contrastive learning method

611

Update the initial value network and the agent pooling module according to the first loss and the second loss, and update the initial policy network with a goal of maximizing the cumulative reward expectation corresponding to the battery charging request to obtain a trained policy network and a trained value network

612

Determine the trained policy network as an information adjustment model corresponding to the each charging station in the charging station set

Fig. 6

700

701

| Acquire a battery charging request |

702

| Determine environment state information corresponding to each charging station in a charging station set |

703

| For the each charging station in the charging station set, determine, through a trained information adjustment model corresponding to the charging station, target operational information of the charging station for the battery charging request according to the environment state information of the charging station |

704

| Display the target operational information of the each charging station in the charging station set for the battery charging request |

705

| Receive a selection instruction and determine a target charging station from the charging station set according to the selection instruction |

Fig. 7

Fig. 8

900

Acquiring unit — 901

Fifth determining unit — 902

Sixth determining unit — 903

Displaying unit — 904

Receiving unit — 905

Fig. 9

1000

Computation unit — 1001

ROM — 1002

RAM — 1003

— 1004

— 1005

I/O Interface

Input unit — 1006

Output unit — 1007

Storage unit — 1008

Communica -tion unit — 1009

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112819215 A

**Non-patent literature cited in the description**

- **ZHANG WEIJIA et al.** *RLCharge: Imitative Multi-Agent Spatiotemporal Reinforcement Learning for Electric Vehicle Charging Station Recommendation*, 27 May 2022